(19) Europäisches Patentamt
European Patent Office
Office européen des brevets

(11) **EP 4 096 058 B1**

(12) **EUROPEAN PATENT SPECIFICATION**

(45) Date of publication and mention of the grant of the patent:
**25.10.2023 Bulletin 2023/43**

(21) Application number: **22165483.3**

(22) Date of filing: **30.03.2022**

(51) International Patent Classification (IPC):
*H02J 50/20* (2016.01)    *H02J 50/80* (2016.01)

(52) Cooperative Patent Classification (CPC):
**H02J 50/80; H02J 50/20**

(54) **WIRELESS CHARGING SYSTEM AND APPARATUS, AND TO-BE-CHARGED DEVICE**

DRAHTLOSES LADESYSTEM UND -GERÄT UND ZU LADENDE VORRICHTUNG

SYSTÈME ET APPAREIL DE CHARGE SANS FIL, ET DISPOSITIF DESTINÉ À ÊTRE CHARGÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2021 CN 202110595767**

(43) Date of publication of application:
**30.11.2022 Bulletin 2022/48**

(73) Proprietor: **Huawei Technologies Co., Ltd.**
**Longgang District**
**Shenzhen,**
**Guangdong 518129 (CN)**

(72) Inventors:
• **PAN, Ning**
**Shenzhen (CN)**
• **DU, Zhixia**
**Shenzhen (CN)**
• **CLERCKX, Bruno**
**London (GB)**
• **KIM, Junghoon**
**London (GB)**

(74) Representative: **Maiwald GmbH**
**Elisenhof**
**Elisenstraße 3**
**80335 München (DE)**

(56) References cited:
**WO-A1-2020/210283    KR-A- 20170 033 796**
**US-A1- 2021 135 510**

**Description**

**TECHNICAL FIELD**

This application relates to the wireless charging field, and in particular, to a wireless charging system and apparatus, and a to-be-charged device.

**BACKGROUND**

A wireless charging technology means using an electromagnetic wave to carry energy to charge a to-be-charged device. Due to development of the wireless charging technology, charging no longer needs to rely on a charging cable, thereby meeting people's requirements for a degree of charging freedom.

In a wireless charging system, after receiving an electromagnetic wave signal, a to-be-charged device converts the electromagnetic wave signal into electric energy to charge the to-be-charged device. It is found through research that an electromagnetic wave signal with a relatively high peak to average power ratio (peak to average power ratio, PAPR) can greatly improve power conversion efficiency of the wireless charging system. However, power conversion efficiency is also affected by a wireless channel and a hardware structure of a to-be-charged device. For example, the wireless channel causes waveform distortion of an electromagnetic wave signal, which reduces a PAPR of the electromagnetic wave signal. Consequently, power conversion efficiency is reduced. Due to different hardware structures, different to-be-charged devices have different signal receiving and conversion performance. As a result, power conversion efficiency is affected.

Currently, a common solution is used to improve power conversion efficiency: An optimal waveform is calculated according to an optimization algorithm by using known channel information and structure information of a to-be-charged device, so as to reduce a loss of an electromagnetic wave signal in a transmission process. In an actual application scenario, it is difficult to obtain the channel information and the structure information of the to-be-charged device in advance. Therefore, the existing method for improving power conversion efficiency of wireless charging has a limitation.

WO 2020/210283 A1 describes a far-field wireless power transfer using localized field with multi-tone signals.

**SUMMARY**

Embodiments of this application provide a wireless charging system and apparatus, and a to-be-charged device, to improve power conversion efficiency of wireless charging.

The present invention is defined by the subject-matter of the independent claims. Additional features of the invention are presented in the dependent claims.

According to a first aspect, this application provides a wireless charging system, and the wireless charging system includes a wireless charging apparatus and a to-be-charged device.

The wireless charging apparatus is configured to: obtain, in a charging period, channel information of a transmission channel and a waveform parameter used to indicate a waveform of an electromagnetic wave signal, where the transmission channel is a channel between the wireless charging apparatus and the to-be-charged device at a first frequency, and the channel information includes signal attenuation and a transmission delay that are of an electromagnetic wave signal transmitted through the transmission channel; and generate a target electromagnetic wave signal based on the channel information and the waveform parameter, and send the target electromagnetic wave signal to the to-be-charged device through the transmission channel.

The to-be-charged device is configured to: receive, through the transmission channel, the target electromagnetic wave signal sent by the wireless charging apparatus; and convert the target electromagnetic wave signal into a direct current signal, and perform charging based on the direct current signal.

In the wireless charging system provided in this embodiment of this application, the wireless charging apparatus can determine, in a charging period, the channel information that includes the signal attenuation and the transmission delay that are of the electromagnetic wave signal transmitted through the transmission channel, and the waveform parameter used to indicate a waveform of an electromagnetic wave signal; and can further send the target electromagnetic wave signal based on the channel information and the waveform parameter, so that the sent target electromagnetic wave signal can adapt to channel transmission, thereby improving power conversion efficiency of wireless charging. In addition, in the method, the channel information and structure information of the to-be-charged device do not need to be learned in advance, and it is only required to determine the channel information and the waveform parameter in a charging period, thereby improving practicability of the wireless charging method.

In a possible design, when obtaining the waveform parameter used to indicate a waveform of an electromagnetic wave signal, the wireless charging apparatus is specifically configured to select the waveform parameter from at least one preset candidate waveform parameter.

According to the design, the wireless charging apparatus does not need to learn a hardware structure of a receive end to calculate the waveform parameter, and can select the waveform parameter from the at least one preset candidate waveform parameter, thereby improving efficiency of determining the waveform parameter.

When the wireless charging apparatus selects the waveform parameter from the at least one preset candidate waveform parameter, the wireless charging apparatus is specifically configured to: send at least one first test signal to the to-be-charged device through the transmission channel, where the at least one first test signal is in a one-to-one correspondence with the at least one candidate waveform parameter, and any first test signal is generated based on a corresponding candidate waveform parameter; receive, through the transmission channel, a first measurement result sent by the to-be-charged device, where the first measurement result is obtained by measuring signal quality of the at least one first test signal by the to-be-charged device; and select the waveform parameter from the at least one candidate waveform parameter based on the first measurement result.

The to-be-charged device is further configured to: receive, through the transmission channel, the at least one first test signal sent by the wireless charging apparatus; measure the signal quality of the at least one first test signal; and generate the first measurement result based on the signal quality of the at least one first test signal, and send the first measurement result to the wireless charging apparatus through the transmission channel.

According to the design, the wireless charging apparatus may determine the at least one first test signal based on the at least one candidate waveform parameter, and each first test signal corresponds to a candidate waveform parameter. The to-be-charged device may generate the first measurement result based on the signal quality of the received at least one first test signal, and send the first measurement result to the wireless charging apparatus to assist the wireless charging apparatus in determining the waveform parameter from the at least one candidate waveform parameter. The target electromagnetic wave signal determined by using the waveform parameter obtained in the method can be more adaptable to transmission in the current transmission channel, thereby improving power conversion efficiency.

In a possible design, the first measurement result includes the signal quality of the at least one first test signal. When selecting the waveform parameter from the at least one candidate waveform parameter based on the first measurement result, the wireless charging apparatus is specifically configured to: determine a first target test signal with highest signal quality based on the signal quality of the at least one first test signal included in the first measurement result; and determine, from the at least one candidate waveform parameter, a candidate waveform parameter corresponding to the first target test signal as the waveform parameter.

Alternatively, the first measurement result includes first indication information, and the first indication information is used to indicate a first target test signal with highest signal quality in the at least one first test signal. When selecting the waveform parameter from the at least one candidate waveform parameter based on the first measurement result, the wireless charging apparatus is specifically configured to: determine the first target test signal indicated by the first indication information; and determine, from the at least one candidate waveform parameter, a candidate waveform parameter corresponding to the first target test signal as the waveform parameter.

According to the design, the first measurement result may include the signal quality of the at least one first test signal, or may include the first indication information used to indicate the first target test signal with highest signal quality, so that the wireless charging apparatus can determine the first target test signal with highest signal quality after receiving the first measurement result, so as to determine an optimal waveform parameter from the at least one candidate waveform parameter.

In a possible design, when obtaining the channel information of the transmission channel, the wireless charging apparatus is specifically configured to: perform a channel measurement process on the transmission channel to obtain the channel information; or select the channel information from at least one piece of preset candidate channel information.

According to the design, this embodiment of this application provides a plurality of manners of determining the channel information. The wireless charging apparatus may perform channel measurement to obtain the channel information or select the channel information from the at least one piece of preset candidate channel information, to ensure that the wireless charging apparatus obtains the channel information in real time, so that the target electromagnetic wave signal determined based on the channel information can adapt to channel transmission, thereby reducing a loss of the target electromagnetic wave signal in the transmission channel.

In a possible design, when performing the channel measurement process on the transmission channel to obtain the channel information, the wireless charging apparatus is specifically configured to: send a beacon signal to the to-be-charged device through the transmission channel, where the beacon signal is used by the to-be-charged device to perform channel measurement; and receive, through the transmission channel, the channel information sent by the to-be-charged device.

The to-be-charged device is further configured to: receive, through the transmission channel, the beacon signal sent by the wireless charging apparatus; perform channel measurement based on the beacon signal to obtain the channel information; and send the channel information to the wireless charging apparatus through the transmission channel.

In a possible design, the to-be-charged device is further configured to send a beacon signal to the wireless charging apparatus through the transmission channel, where the beacon signal is used by the wireless charging apparatus to perform channel measurement.

When performing the channel measurement process on the transmission channel to obtain the channel information, the wireless charging apparatus is specifically configured to: receive, through the transmission channel, the beacon signal sent by the to-be-charged device; and perform channel measurement based on the beacon signal to obtain the channel information.

According to the design, the wireless charging apparatus can measure the channel information of the current transmission channel by using the beacon signal, to ensure accuracy of obtained target channel information, thereby reducing a loss caused to the target electromagnetic wave signal in transmission on the current wireless channel, and improving power conversion efficiency.

In a possible design, when selecting the channel information from the at least one piece of preset candidate channel information, the wireless charging apparatus is specifically configured to: send at least one second test signal to the to-be-charged device through the transmission channel, where the at least one second test signal is in a one-to-one correspondence with the at least one piece of candidate channel information, and any second test signal is generated based on corresponding candidate channel information; receive, through the transmission channel, a second measurement result sent by the to-be-charged device, where the second measurement result is obtained by measuring signal quality of the at least one second test signal by the to-be-charged device; and select the channel information from the at least one piece of candidate channel information based on the second measurement result.

The to-be-charged device is further configured to: receive, through the transmission channel, the at least one second test signal sent by the wireless charging apparatus; measure signal quality of each of the at least one second test signal; and generate the second measurement result based on the signal quality of the at least one second test signal, and send the second measurement result to the wireless charging apparatus through the transmission channel.

In a possible design, the second measurement result includes the signal quality of the at least one second test signal. When selecting the channel information from the at least one piece of candidate channel information based on the second measurement result, the wireless charging apparatus is specifically configured to: determine a second target test signal with highest signal quality based on the signal quality of the at least one second test signal included in the second measurement result; and determine, from the at least one piece of candidate channel information, candidate channel information corresponding to the second target test signal as the channel information.

Alternatively, the second measurement result includes second indication information, and the second indication information is used to indicate a second target test signal with highest signal quality in the at least one second test signal. When selecting the channel information from the at least one piece of candidate channel information based on the second measurement result, the wireless charging apparatus is specifically configured to: determine the second target test signal indicated by the second indication information; and determine, from the at least one piece of candidate channel information, candidate channel information corresponding to the second target test signal as the channel information.

According to the design, the wireless charging apparatus can preset at least one piece of candidate channel information, and the at least one second test signal is in a one-to-one correspondence with the at least one piece of candidate channel information. The wireless charging apparatus may send the at least one piece of second test information to the to-be-charged device, and select the channel information from the at least one piece of candidate channel information based on the second measurement result fed back by the to-be-charged device. In this manner, the channel information does not need to be calculated, and instead, the channel information is determined by measuring the signal quality of the at least one second test signal, so that a calculation amount of the to-be-charged device is reduced, thereby improving wireless charging efficiency while ensuring accuracy of the channel information.

The waveform parameter is an exponential factor for an exponential operation performed on the signal attenuation in the channel information in a process of generating the target electromagnetic wave signal.

The target electromagnetic wave signal meets the following formula:

$$w_n = e^{j\overline{\varphi_n}} A_n^{\beta} \sqrt{\frac{2P}{\sum_{n=1}^{N} A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus, and $\beta$ is the waveform parameter.

In a possible design, the transmission channel corresponds to a transceiver antenna combination, and the transceiver antenna combination includes one transmit antenna in the wireless charging apparatus and one receive antenna in the to-be-charged device.

According to the design, one transceiver antenna combination corresponds to one transmission channel. According to the wireless charging method provided in this embodiment of this application, the target electromagnetic wave signal may be determined for each of a plurality of transmission channels corresponding to a plurality of antenna combinations. Therefore, the wireless charging apparatus may send different electromagnetic wave signals by using different transceiver antennas to obtain an expected signal radiation mode, to implement beamforming, thereby improving power conversion efficiency of wireless charging performed on the to-be-charged device.

In a possible design, the wireless charging apparatus is further configured to: before obtaining the channel information of the transmission channel and the waveform parameter used to indicate a waveform of an electromagnetic wave signal, receive, through the transmission channel, charging request information sent by the to-be-charged device.

The to-be-charged device is further configured to: determine that current power is greater than or equal to power required for sending the charging request information, and send the charging request information to the wireless charging apparatus through the transmission channel.

According to the design, the to-be-charged device may send the charging request information to the wireless charging apparatus after determining that power of the to-be-charged device can be used to send the charging request information, so that the wireless charging apparatus determines the target electromagnetic wave signal to efficiently charge the to-be-charged device.

According to a second aspect, this application provides a wireless charging apparatus, including a signal processing module, a power signal generation module, and at least one transceiver antenna.

The signal processing module is configured to obtain, in a charging period, channel information of a transmission channel and a waveform parameter used to indicate a waveform of an electromagnetic wave signal, where the transmission channel is a channel between the wireless charging apparatus and a to-be-charged device at a first frequency, and the channel information includes signal attenuation and a transmission delay that are of an electromagnetic wave signal transmitted through the transmission channel.

The power signal generation module is configured to generate a target electromagnetic wave signal based on the channel information and the waveform parameter.

The at least one transceiver antenna is configured to send the target electromagnetic wave signal to the to-be-charged device through the transmission channel.

In a possible design, when obtaining the waveform parameter used to indicate a waveform of an electromagnetic wave signal, the signal processing module is specifically configured to select the waveform parameter from at least one preset candidate waveform parameter.

In a possible design, the at least one transceiver antenna is further configured to: send at least one first test signal to the to-be-charged device through the transmission channel, where the at least one first test signal is in a one-to-one correspondence with the at least one candidate waveform parameter, and any first test signal is generated based on a corresponding candidate waveform parameter; and receive, through the transmission channel, a first measurement result sent by the to-be-charged device, where the first measurement result is obtained by measuring signal quality of the at least one first test signal by the to-be-charged device.

When selecting the waveform parameter from the at least one preset candidate waveform parameter, the signal processing module is specifically configured to select the waveform parameter from the at least one candidate waveform parameter based on the first measurement result.

In a possible design, the first measurement result includes the signal quality of the at least one first test signal. When selecting the waveform parameter from the at least one candidate waveform parameter based on the first measurement result, the signal processing module is specifically configured to: determine a first target test signal with highest signal quality based on the signal quality of the at least one first test signal included in the first measurement result; and determine, from the at least one candidate waveform parameter, a candidate waveform parameter corresponding to the first target test signal as the waveform parameter.

Alternatively, the first measurement result includes first indication information, and the first indication information is used to indicate a first target test signal with highest signal quality in the at least one first test signal. When selecting the waveform parameter from the at least one candidate waveform parameter based on the first measurement result, the signal processing module is specifically configured to: determine the first target test signal indicated by the first indication information; and determine, from the at least one candidate waveform parameter, a candidate waveform parameter corresponding to the first target test signal as the waveform parameter.

In a possible design, when obtaining the channel information of the transmission channel, the signal processing module is specifically configured to: perform a channel measurement process on the transmission channel to obtain the channel information; or select the channel information from at least one piece of preset candidate channel information.

In a possible design, the at least one transceiver antenna is further configured to: send a beacon signal to the to-be-charged device through the transmission channel, where the beacon signal is used by the to-be-charged device to perform channel measurement; and receive, through the transmission channel, the channel information sent by the to-be-charged device.

In a possible design, the at least one transceiver antenna is further configured to receive, through the transmission channel, a beacon signal sent by the to-be-charged device. When performing the channel measurement process on the transmission channel to obtain the channel information, the signal processing module is specifically configured to perform channel measurement based on the beacon signal to obtain the channel information.

In a possible design, the at least one transceiver antenna is further configured to: send at least one second test signal to the to-be-charged device through the transmission channel, where the at least one second test signal is in a one-to-one correspondence with the at least one piece of candidate channel information, and any second test signal is generated based on corresponding candidate channel information; and send the at least one second test signal to the to-be-charged device through the transmission channel, where the at least one second test signal is in a one-to-one correspondence with the at least one piece of candidate channel information, and any second test signal is generated based on corresponding candidate channel information.

When selecting the channel information from the at least one piece of preset candidate channel information, the signal processing module is specifically configured to select the channel information from the at least one piece of candidate channel information based on the second measurement result.

In a possible design, the second measurement result includes signal quality of the at least one second test signal. When selecting the channel information from the at least one piece of candidate channel information based on the second measurement result, the signal processing module is specifically configured to: determine a second target test signal with highest signal quality based on the signal quality of the at least one second test signal included in the second measurement result; and determine, from the at least one piece of candidate channel information, candidate channel information corresponding to the second target test signal as the channel information.

Alternatively, the second measurement result includes second indication information, and the second indication information is used to indicate a second target test signal with highest signal quality in the at least one second test signal. When selecting the channel information from the at least one piece of candidate channel information based on the second measurement result, the signal processing module is specifically configured to: determine the second target test signal indicated by the second indication information; and determine, from the at least one piece of candidate channel information, candidate channel information corresponding to the second target test signal as the channel information.

The waveform parameter is an exponential factor for an exponential operation performed on the signal attenuation in the channel information in a process of generating the target electromagnetic wave signal.

The target electromagnetic wave signal meets the following formula:

$$w_n = e^{j\overline{\varphi_n}} A_n^{\beta} \sqrt{\frac{2P}{\sum_{n=1}^{N} A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus, and $\beta$ is the waveform parameter.

In a possible design, the transmission channel corresponds to a transceiver antenna combination, and the transceiver antenna combination includes one transmit antenna in the wireless charging apparatus and one receive antenna in the to-be-charged device.

In a possible design, the at least one transceiver antenna is further configured to: before the signal processing module obtains the channel information of the transmission channel and the waveform parameter used to indicate a waveform of an electromagnetic wave signal, receive, through the transmission channel, charging request information sent by the to-be-charged device.

According to a third aspect, this application provides a to-be-charged device, including a transceiver antenna and a power receiving module.

The at least one transceiver antenna is configured to receive, through a transmission channel, a target electromagnetic wave signal sent by a wireless charging apparatus, where the target electromagnetic wave signal is generated by the wireless charging apparatus based on obtained channel information of the transmission channel and an obtained waveform parameter used to indicate a waveform of an electromagnetic wave signal.

The power receiving module is configured to: convert the target electromagnetic wave signal into a direct current signal, and perform charging based on the direct current signal.

In a possible design, the at least one transceiver antenna is further configured to: receive, through the transmission channel, at least one first test signal sent by the wireless charging apparatus, where the at least one first test signal is in a one-to-one correspondence with at least one candidate waveform parameter, and any first test signal is generated based on a corresponding candidate waveform parameter; and send a first measurement result to the wireless charging apparatus through the transmission channel, so that the wireless charging apparatus selects the waveform parameter from the at least one candidate waveform parameter based on the first measurement result.

The power receiving module is further configured to measure signal quality of the at least one first test signal. The to-be-charged device further includes a signal processing module, and the signal processing module is configured to generate the first measurement result based on the signal quality of the at least one first test signal.

In a possible design, the first measurement result includes the signal quality of the at least one first test signal; or the first measurement result includes first indication information, and the first indication information is used to indicate a first target test signal with highest signal quality in the at least one first test signal.

In a possible design, the at least one transceiver antenna is further configured to: receive, through the transmission channel, a beacon signal sent by the wireless charging apparatus; and send the channel information to the wireless charging apparatus through the transmission channel.

The signal processing module is further configured to perform channel measurement based on the beacon signal to obtain the channel information.

In a possible design, the at least one transceiver antenna is further configured to send a beacon signal to the wireless charging apparatus through the transmission channel, where the beacon signal is used by the wireless charging apparatus to perform channel measurement.

In a possible design, the at least one transceiver antenna is further configured to: receive, through the transmission channel, at least one second test signal sent by the wireless charging apparatus, where the at least one second test signal is in a one-to-one correspondence with at least one piece of candidate channel information, and any second test signal is generated based on corresponding candidate channel information; and send a second measurement result to the wireless charging apparatus through the transmission channel, so that the wireless charging apparatus selects the channel information from the at least one piece of candidate channel information based on the second measurement result.

The power receiving module is further configured to measure signal quality of each of the at least one second test signal.

The signal processing module is further configured to generate the second measurement result based on the signal quality of the at least one second test signal.

In a possible design, the second measurement result includes the signal quality of the at least one second test signal; or the second measurement result includes second indication information, and the second indication information is used to indicate a second target test signal with highest signal quality in the at least one second test signal.

In a possible design, the transmission channel corresponds to a transceiver antenna combination, and the transceiver antenna combination includes one transmit antenna in the wireless charging apparatus and one receive antenna in the to-be-charged device.

In a possible design, the signal processing module is further configured to determine that current power is greater than or equal to power required for sending charging request information.

The at least one transceiver antenna is further configured to send the charging request information to the wireless charging apparatus through the transmission channel.

According to a fourth aspect, an embodiment of this application provides a wireless charging method applied to a wireless charging apparatus. The method includes:

obtaining, in a charging period, channel information of a transmission channel and a waveform parameter used to indicate a waveform of an electromagnetic wave signal, where the transmission channel is a channel between the wireless charging apparatus and a to-be-charged device at a first frequency, and the channel information includes signal attenuation and a transmission delay that are of an electromagnetic wave signal transmitted through the transmission channel; and

generating a target electromagnetic wave signal based on the channel information and the waveform parameter, and sending the target electromagnetic wave signal to the to-be-charged device through the transmission channel by using the transceiver antenna 1801.

In a possible design, the obtaining a waveform parameter used to indicate a waveform of an electromagnetic wave signal includes: selecting the waveform parameter from at least one preset candidate waveform parameter.

In a possible design, the selecting the waveform parameter from at least one preset candidate waveform parameter includes:

sending at least one first test signal to the to-be-charged device through the transmission channel, where the at least one first test signal is in a one-to-one correspondence with the at least one candidate waveform parameter, and any first test signal is generated based on a corresponding candidate waveform parameter; receiving, through the transmission channel, a first measurement result sent by the to-be-charged device, where the first measurement result is obtained by measuring signal quality of the at least one first test signal by the to-be-charged device; and selecting the waveform parameter from the at least one candidate waveform parameter based on the first measurement result.

In a possible design, the first measurement result includes the signal quality of the at least one first test signal.

The selecting the waveform parameter from the at least one candidate waveform parameter based on the first measurement result includes: determining a first target test signal with highest signal quality based on the signal quality of the at least one first test signal included in the first measurement result; and determining, from the at least one candidate waveform parameter, a candidate waveform parameter corresponding to the first target test signal as the waveform parameter.

Alternatively, the first measurement result includes first indication information, and the first indication information is used to indicate a first target test signal with highest signal quality in the at least one first test signal. The selecting the waveform parameter from the at least one candidate waveform parameter based on the first measurement result includes: determining the first target test signal indicated by the first indication information; and determining, from the at least one candidate waveform parameter, a candidate waveform parameter corresponding to the first target test signal as the waveform parameter.

In a possible design, the obtaining channel information of a transmission channel includes: performing a channel measurement process on the transmission channel to obtain the channel information; or selecting the channel information from at least one piece of preset candidate channel information.

In a possible design, the performing a channel measurement process on the transmission channel to obtain the channel information includes: sending a beacon signal to the to-be-charged device through the transmission channel, where the beacon signal is used by the to-be-charged device to perform channel measurement; and receiving, through the transmission channel, the channel information sent by the to-be-charged device.

In a possible design, the performing a channel measurement process on the transmission channel to obtain the channel information includes: receiving, through the transmission channel, a beacon signal sent by the to-be-charged device; and performing channel measurement based on the beacon signal to obtain the channel information.

In a possible design, the selecting the channel information from at least one piece of preset candidate channel information includes: sending at least one second test signal to the to-be-charged device through the transmission channel, where the at least one second test signal is in a one-to-one correspondence with the at least one piece of candidate channel information, and any second test signal is generated based on corresponding candidate channel information; receiving, through the transmission channel, a second measurement result sent by the to-be-charged device, where the second measurement result is obtained by measuring signal quality of the at least one second test signal by the to-be-charged device; and selecting the channel information from the at least one piece of candidate channel information based on the second measurement result.

In a possible design, the second measurement result includes the signal quality of the at least one second test signal. The selecting the channel information from the at least one piece of candidate channel information based on the second measurement result includes: determining a second target test signal with highest signal quality based on the signal quality of the at least one second test signal included in the second measurement result; and determining, from the at least one piece of candidate channel information, candidate channel information corresponding to the second target test signal as the channel information. Alternatively, the second measurement result includes second indication information, and the second indication information is used to indicate a second target test signal with highest signal quality in the at least one second test signal. The selecting the channel information from the at least one piece of candidate channel information based on the second measurement result includes: determining the second target test signal indicated by the second indication information; and determining, from the at least one piece of candidate channel information, candidate channel information corresponding to the second target test signal as the channel information.

The waveform parameter is an exponential factor for an exponential operation performed on the signal attenuation in the channel information in a process of generating the target electromagnetic wave signal.

The target electromagnetic wave signal meets the following formula:

$$w_n = e^{j\overline{\varphi_n}} A_n^{\beta} \sqrt{\frac{2P}{\sum_{n=1}^{N} A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus, and $\beta$ is the waveform parameter.

In a possible design, the transmission channel corresponds to a transceiver antenna combination, and the transceiver antenna combination includes one transmit antenna in the wireless charging apparatus and one receive antenna in the to-be-charged device.

In a possible design, before the obtaining channel information of a transmission channel and a waveform parameter used to indicate a waveform of an electromagnetic wave signal, the method further includes: receiving, through the transmission channel, charging request information sent by the to-be-charged device.

According to a fifth aspect, an embodiment of this application provides a wireless charging method applied to a to-be-charged device. The method includes:
receiving, through a transmission channel, a target electromagnetic wave signal sent by a wireless charging apparatus, where the target electromagnetic wave signal is generated by the wireless charging apparatus based on obtained channel information of the transmission channel and an obtained waveform parameter used to indicate a waveform of an electromagnetic wave signal; and converting the target electromagnetic wave signal into a direct current signal, and performing charging based on the direct current signal.

In a possible design, the method further includes: receiving, through the transmission channel, at least one first test signal sent by the wireless charging apparatus, where the at least one first test signal is in a one-to-one correspondence with at least one candidate waveform parameter, and any first test signal is generated based on a corresponding candidate waveform parameter; measuring signal quality of the at least one first test signal; generating a first measurement result based on the signal quality of the at least one first test signal; and sending the first measurement result to the wireless charging apparatus through the transmission channel, so that the wireless charging apparatus selects the waveform parameter from the at least one candidate waveform parameter based on the first measurement result.

In a possible design, the first measurement result includes the signal quality of the at least one first test signal; or the first measurement result includes first indication information, and the first indication information is used to indicate a first target test signal with highest signal quality in the at least one first test signal.

In a possible design, the method further includes: receiving, through the transmission channel, a beacon signal sent by the wireless charging apparatus; performing channel measurement based on the beacon signal to obtain the channel information; and sending the channel information to the wireless charging apparatus through the transmission channel.

In a possible design, the method further includes: sending a beacon signal to the wireless charging apparatus through the transmission channel, where the beacon signal is used by the wireless charging apparatus to perform channel measurement.

In a possible design, the method further includes: receiving, through the transmission channel, at least one second test signal sent by the wireless charging apparatus, where the at least one second test signal is in a one-to-one correspondence with at least one piece of candidate channel information, and any second test signal is generated based on corresponding candidate channel information; measuring signal quality of each of the at least one second test signal; generating a second measurement result based on signal quality of the at least one second test signal; and sending the second measurement result to the wireless charging apparatus through the transmission channel, so that the wireless charging apparatus selects the channel information from the at least one piece of candidate channel information based on the second measurement result.

In a possible design, the second measurement result includes the signal quality of the at least one second test signal; or the second measurement result includes second indication information, and the second indication information is used to indicate a second target test signal with highest signal quality in the at least one second test signal.

In a possible design, the transmission channel corresponds to a transceiver antenna combination, and the transceiver antenna combination includes one transmit antenna in the wireless charging apparatus and one receive antenna in the to-be-charged device.

In a possible design, the method further includes: determining that current power is greater than or equal to power required for sending charging request information, and sending the charging request information to the wireless charging apparatus through the transmission channel.

According to a sixth aspect, an embodiment of this application provides a wireless charging apparatus, including a transceiver antenna and at least one processor. The at least one processor is coupled to at least one memory, and the at least one processor is configured to read instructions stored in the at least one memory to perform the method provided in the fourth aspect.

According to a seventh aspect, an embodiment of this application provides a to-be-charged device, including a transceiver antenna and at least one processor. The at least one processor is coupled to at least one memory, and the at least one processor is configured to read instructions stored in the at least one memory to perform the method provided in the fifth aspect.

## BRIEF DESCRIPTION OF DRAWINGS

FIG. 1 is a diagram of an architecture of a wireless charging system;
FIG. 2 is a schematic diagram of power conversion efficiency of a high-PAPR random signal and an equi-amplitude continuous wave signal;
FIG. 3 is a schematic diagram of a change in a PAPR of an electromagnetic wave signal in a transmission process on a wireless channel;

FIG. 4 is an interaction flowchart of a wireless charging method according to an embodiment of this application;

FIG. 5 is a schematic diagram of a signal radiation mode of broadcast power generation and a signal radiation mode after beamforming according to an embodiment of this application;

FIG. 6 is a schematic diagram of a charging period according to an embodiment of this application;

FIG. 7 is a flowchart of a waveform parameter determining method according to an embodiment of this application;

FIG. 8 is a flowchart of a first channel information determining manner according to an embodiment of this application;

FIG. 9 is a flowchart of a second channel information determining manner according to an embodiment of this application;

FIG. 10 is a flowchart of a third channel information determining method according to an embodiment of this application;

FIG. 11 is a schematic diagram of structures of a wireless charging apparatus and a to-be-charged device according to an embodiment of this application;

FIG. 12 is a schematic diagram of a first frame structure of an electromagnetic wave signal transmitted between a wireless charging apparatus and a to-be-charged device according to an embodiment of this application;

FIG. 13 is a flowchart of a first instance of a wireless charging method according to an embodiment of this application;

FIG. 14 is a schematic diagram of a second frame structure of an electromagnetic wave signal transmitted between a wireless charging apparatus and a to-be-charged device according to an embodiment of this application;

FIG. 15 is a flowchart of a second instance of a wireless charging method according to an embodiment of this application;

FIG. 16 is a schematic diagram of a third frame structure of an electromagnetic wave signal transmitted between a wireless charging apparatus and a to-be-charged device according to an embodiment of this application;

FIG. 17 is a flowchart of a third instance of a wireless charging method according to an embodiment of this application;

FIG. 18 is a schematic diagram of a structure of a wireless charging apparatus according to an embodiment of this application;

FIG. 19 is a schematic diagram of a structure of a to-be-charged device according to an embodiment of this application;

FIG. 20a is a schematic diagram of a structure of a first to-be-charged device and a diagram of power conversion efficiency corresponding to different candidate waveform parameters when the to-be-charged device is wirelessly charged according to an embodiment of this application; and

FIG. 20b is a schematic diagram of a structure of a second to-be-charged device and a diagram of power conversion efficiency corresponding to different candidate waveform parameters when the to-be-charged device is wirelessly charged according to an embodiment of this application.

## DESCRIPTION OF EMBODIMENTS

To facilitate understanding of the embodiments of this application, the following describes terms related to the embodiments of this application.

A wireless charging technology means using an electromagnetic wave to carry energy to charge a to-be-charged device. Specifically, a wireless charging apparatus may transmit an electromagnetic wave by using a transceiver antenna, and the electromagnetic wave is transmitted in air. The to-be-charged device can receive the electromagnetic wave by using a transceiver antenna, and convert the electromagnetic wave into a direct current signal, to charge the to-be-charged device by using electric energy obtained after conversion. Wireless charging can reach a transmission distance at a meter level. Therefore, the technology in which the electromagnetic wave is used for wireless charging may also be referred to as a remote wireless charging technology.

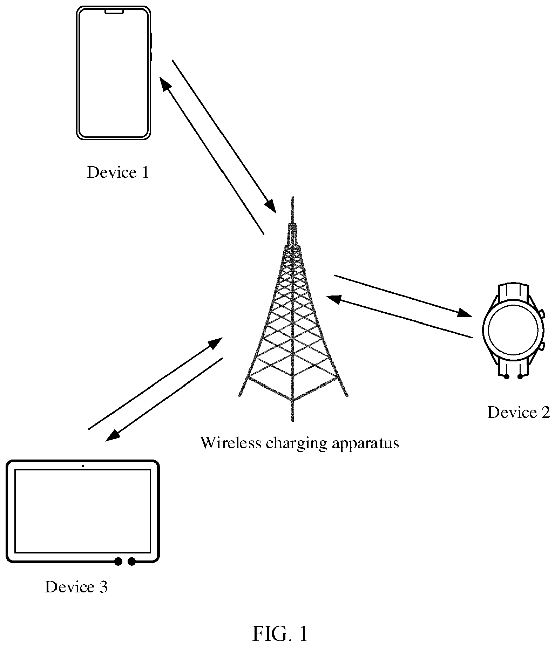

FIG. 1 is a diagram of an architecture of a wireless charging system. Referring to FIG. 1, the wireless charging system includes a wireless charging apparatus and at least one to-be-charged device, for example, three to-be-charged devices (a device 1, a device 2, and a device 3) shown in FIG. 1 as examples. Optionally, in this embodiment of this application, the wireless charging apparatus may be a device such as a charging base station, and the to-be-charged device may be a terminal device such as a mobile phone, a tablet computer, a wearable device (for example, a watch, a band, a helmet, or an earphone), an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television, a smart sound box, or a smart camera); or may be Internet of Things (internet of things, IOT) devices corresponding to various applications.

In a wireless charging process, the wireless charging apparatus may send an electromagnetic wave signal to the to-be-charged device. After receiving the electromagnetic wave signal, the to-be-charged device converts the electromagnetic wave signal into a direct current signal, to charge the to-be-charged device.

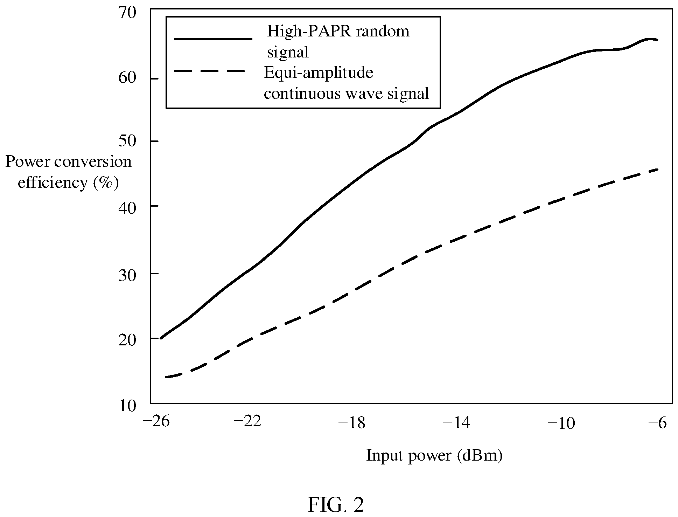

In a wireless charging technology, how to improve power conversion efficiency of converting an electromagnetic wave signal into a direct current signal is an important problem. It is found through research that an electromagnetic wave signal with a relatively high PAPR can greatly improve power conversion efficiency of the wireless charging system. FIG. 2 is a schematic diagram of power conversion efficiency of a high-PAPR random signal and an equi-amplitude continuous wave signal. A solid line represents power conversion efficiency of the high-PAPR random signal, and a dashed line represents power conversion efficiency of the equi-amplitude continuous wave signal. It can be learned from FIG. 2 that when input power is the same, power conversion efficiency of the random signal with a high PAPR is higher than power conversion efficiency of the equi-amplitude continuous wave signal. Therefore, increasing a PAPR of an electromagnetic wave signal is an effective manner of improving conversion efficiency of wireless charging.

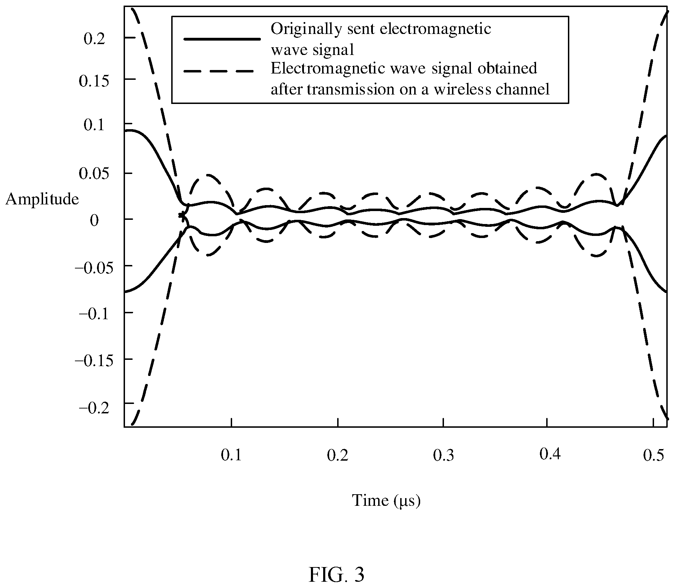

In a process of transmitting an electromagnetic wave signal on a wireless channel, a waveform of the electromagnetic wave signal is distorted. As a result, a PAPR of the electromagnetic wave signal decreases. FIG. 3 is a schematic diagram of a change in a PAPR of an electromagnetic wave signal in a transmission process on a wireless channel. A dashed line represents a waveform of an originally sent electromagnetic wave signal, and a solid line represents a waveform of the electromagnetic wave signal after the electromagnetic wave signal is transmitted through the wireless channel. It can be learned from FIG. 3 that after the electromagnetic wave signal is transmitted through the wireless channel, the waveform of the electromagnetic wave signal is distorted, which causes a decrease in the PAPR of the electromagnetic wave signal. As a result, power conversion efficiency of wireless charging is further affected.

In addition, power conversion efficiency is also affected by a hardware structure of a to-be-charged device. Due to different hardware structures, different to-be-charged devices have different signal receiving and conversion performance. As a result, power conversion efficiency is affected.

Currently, a common solution is used to improve power conversion efficiency: An optimal waveform is calculated according to an optimization algorithm by using known channel information and structure information of a to-be-charged device, so as to reduce a loss of an electromagnetic wave signal in a transmission process. However, in an actual application scenario, the channel information changes due to impact of various factors, and a relatively large error may exist when the channel information is learned in advance. In addition, because there are many types of to-be-charged devices and many developers, and different to-be-charged devices have different structures, it is relatively difficult to learn structure information of each to-be-charged device. Therefore, the existing method for improving power conversion efficiency of wireless charging has a limitation.

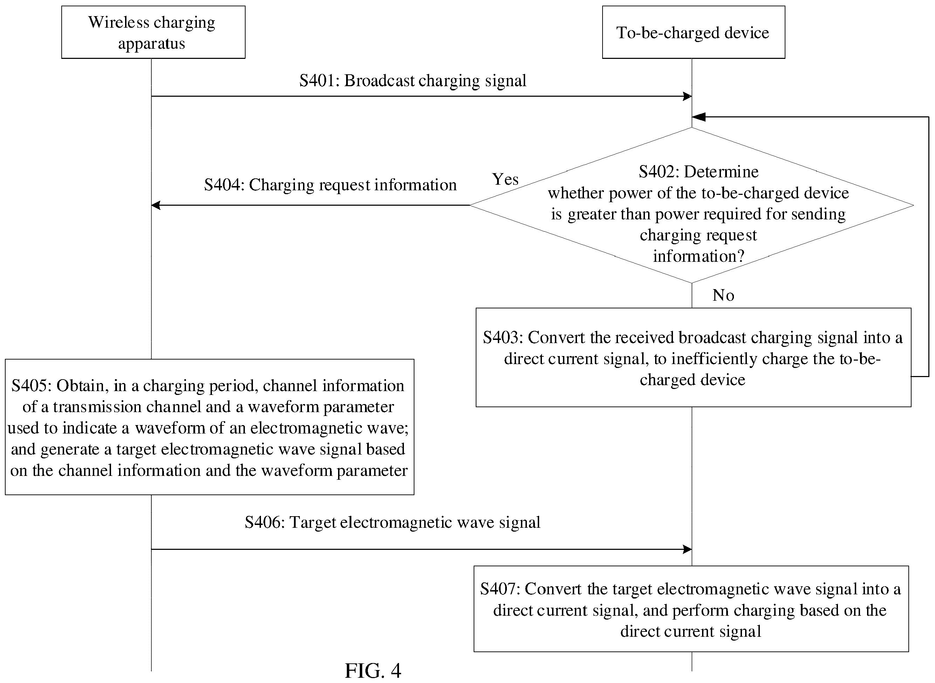

Based on the foregoing problem, the embodiments of this application provide a wireless charging method, to improve power conversion efficiency of wireless charging. The method may be applied to the wireless charging system shown in FIG. 1. The method is specifically described below with reference to a flowchart of a wireless charging method shown in FIG. 4.

S401: A wireless charging apparatus performs broadcast power generation to send a broadcast charging signal, and a to-be-charged device receives the broadcast charging signal.

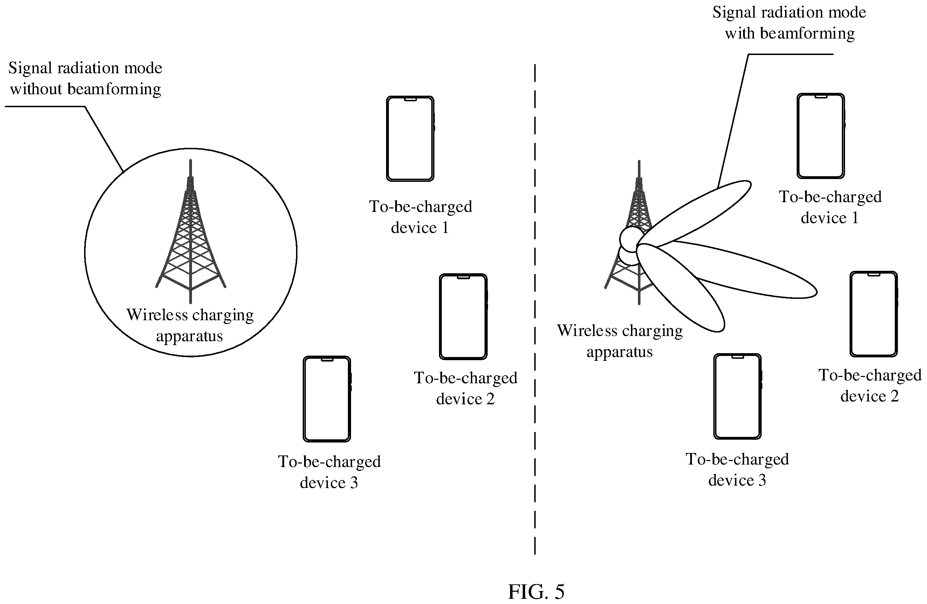

Broadcast power generation means that the wireless charging apparatus does not perform beamforming or waveform optimization processing on a sent electromagnetic wave signal. When a transceiver antenna of the wireless charging apparatus is a transceiver antenna array, beamforming means that a parameter of the transceiver antenna array is adjusted, so that signals at some angles obtain constructive interference while signals at some other angles obtain destructive interference, thereby obtaining an expected signal radiation mode. For example, FIG. 5 shows a signal radiation mode of broadcast power generation and a signal radiation mode after beamforming. It can be learned that in a broadcast power generation phase, an electromagnetic wave signal sent by the wireless charging apparatus is not for a specific to-be-charged device. Waveform optimization processing means that a waveform parameter of a sent electromagnetic wave signal is adjusted to reduce a loss of the electromagnetic wave signal during transmission on a wireless channel. For example, the wireless charging method provided in this embodiment of this application may be considered as a wireless charging method combining beamforming and beam optimization.

In the broadcast power generation phase, the wireless charging apparatus may send the broadcast charging signal through broadcast, and each to-be-charged device in a transmission range of the broadcast charging signal sent by the wireless charging device can receive the broadcast charging signal sent by the wireless charging apparatus.

S402: The to-be-charged device determines whether power of the to-be-charged device is greater than power required for sending charging request information; and if the power is greater than the power required for sending the charging request information, proceed to step S404; or if the power is not greater than the power required for sending the charging request information, proceed to step S403.

Optionally, the charging request information sent by the to-be-charged device to the wireless charging apparatus may be, for example, an acknowledge (acknowledge character, ACK) sent by the to-be-charged device. The ACK is used to indicate that the to-be-charged device receives the broadcast charging signal sent by the wireless charging apparatus.

S403: The to-be-charged device converts the received broadcast charging signal into a direct current signal, to inefficiently charge the to-be-charged device.

It can be understood that the wireless charging apparatus sends the broadcast charging signal without performing beamforming and waveform optimization on a sent electromagnetic wave signal, and therefore power of the broadcast charging signal that can be received by the to-be-charged device is not high. However, in this case, the power of the to-be-charged device is not sufficient to support the to-be-charged device in sending the charging request information to the wireless charging apparatus. Therefore, the to-be-charged device needs to convert the received broadcast charging signal into a direct current signal to inefficiently charge the to-be-charged device until the power of the to-be-charged device is greater than the power required for sending the charging request information.

S404: The to-be-charged device sends the charging request information to the wireless charging apparatus, and the wireless charging apparatus receives the charging request information sent by the to-be-charged device.

S405: The wireless charging apparatus obtains, in a charging period, channel information of a transmission channel and a waveform parameter used to indicate a waveform of an electromagnetic wave signal; and generates a target electromagnetic wave signal based on the channel information and the waveform parameter.

The transmission channel is a channel between the wireless charging apparatus and the to-be-charged device at a first frequency. The first frequency may be a frequency obtained through division in advance. For example, N frequencies are obtained through division in advance, and N is a positive integer greater than or equal to 1. The transmission channel between the wireless charging apparatus and the to-be-charged device is a medium that is between the wireless charging apparatus and the to-be-charged device and that is used to transmit an electromagnetic wave signal. Specifically, the wireless charging apparatus sends an electromagnetic wave signal by using a transmit antenna, the electromagnetic wave signal is transmitted to the to-be-charged device through the transmission channel, and the to-be-charged device receives the electromagnetic wave signal by using a receive antenna. It can be understood that a transmission channel actually carrying the signal is not a completely ideal transmission channel, and both signal attenuation and a delay are generated when the electromagnetic wave signal is transmitted on the transmission channel. The channel information of the transmission channel includes signal attenuation and a transmission delay that are of an electromagnetic wave signal transmitted through the transmission channel.

The waveform parameter is a parameter value used to indicate a waveform of an electromagnetic wave signal, and the waveform parameter may be a constant value.

The target electromagnetic wave signal may meet Formula 1:

$$w_n = e^{j\overline{\varphi_n}} A_n^\beta \sqrt{\frac{2P}{\sum_{n=1}^N A_n^{2\beta}}} \qquad \text{(Formula 1)}$$

where n represents the first frequency; $w_n$ represents the target electromagnetic wave signal, where $0 < n \leq N$; $\varphi_n$ represents the transmission delay included in the channel information; $A_n$ represents the signal attenuation included in the channel information; P is total transmit power of the wireless charging apparatus; and $\beta$ is the waveform parameter.

It can be learned from Formula 1 that the waveform parameter $\beta$ may be an exponential factor for an exponential operation performed on the signal attenuation in the channel information in a process of generating the target electromagnetic wave signal.

It can be learned from the foregoing description that the channel information of the transmission channel may change. Therefore, in this embodiment of this application, a charging period is set. In a charging period, the wireless charging apparatus generates the target electromagnetic wave signal and sends the target electromagnetic wave signal to the to-be-charged device. The to-be-charged device may convert the received target electromagnetic wave signal into a direct current signal, to charge the to-be-charged device. After a charging period ends and at the beginning of a next charging period, the wireless charging apparatus may re-determine the channel information and the waveform parameter, and generate the target electromagnetic wave signal, to ensure that the sent target electromagnetic wave signal can adapt to the transmission channel in real time, thereby reducing a signal loss and a transmission delay of the target electromagnetic wave signal during transmission on the transmission channel.

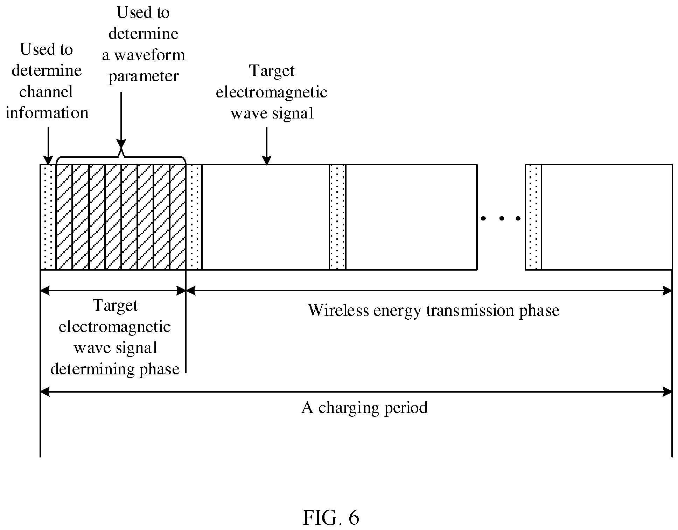

In an optional implementation, a charging period may include a target electromagnetic wave signal determining phase and a wireless energy transmission phase. For example, FIG. 6 is a schematic diagram of a charging period. In the target electromagnetic wave signal determining phase, the wireless charging apparatus determines the channel information and the waveform parameter, and determines the target electromagnetic wave signal based on the channel information and the waveform parameter. In the wireless energy transmission phase, the wireless charging apparatus sends the target electromagnetic wave signal to the to-be-charged device. In the wireless energy transmission phase, the to-be-charged device may convert the received target electromagnetic wave signal into a direct current signal, to charge the to-be-charged device.

Optionally, after determining the channel information and the waveform parameter, the wireless charging apparatus may generate the target electromagnetic wave signal according to Formula 1.

S406: The wireless charging apparatus sends the target electromagnetic wave signal to the to-be-charged device through the transmission channel.

S407: The to-be-charged device converts the target electromagnetic wave signal into a direct current signal, and performs charging based on the direct current signal.

Further, it can be learned from Formula 1 that in S405, parameters that need to be determined by the wireless charging apparatus before the wireless charging apparatus generates the target electromagnetic wave signal include the channel information and the waveform parameter. A method for determining the waveform parameter by the wireless charging apparatus in this embodiment of this application is described below.

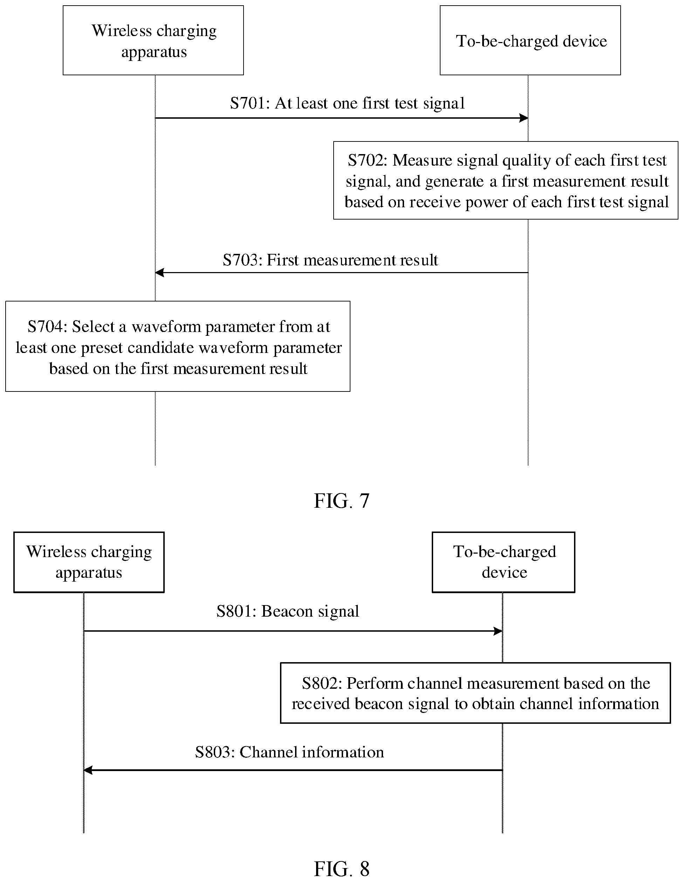

FIG. 7 is a flowchart of a waveform parameter determining method according to an embodiment of this application. The method includes the following steps.

S701: The wireless charging apparatus sends at least one first test signal to the to-be-charged device through the transmission channel, and the to-be-charged device receives the at least one first test signal sent by the wireless charging apparatus through the transmission channel.

Optionally, at least one candidate waveform parameter may be preset, and the at least one candidate waveform parameter may be determined based on a historical waveform parameter stored in the wireless charging apparatus, or may be set based on experience of a skilled person. The at least one candidate waveform parameter is in a one-to-one correspondence with the at least one first test signal, and any first test signal is generated based on a corresponding candidate waveform parameter. In addition, it can be learned according to Formula 1 that an electromagnetic wave signal may be determined by using the channel information and the waveform parameter. In this case, a piece of channel information may be preset, for example, attenuation and a delay that are set are used as channel information corresponding to the at least one first test signal.

S702: The to-be-charged device measures signal quality of each first test signal, and generates a first measurement result based on the signal quality of each first test signal.

That the to-be-charged device measures the signal quality of each first test signal may be measuring receive power of each first test signal. The first measurement result includes the signal quality of each of the at least one first test signal; or the first measurement result includes first indication information, and the first indication information is used to indicate a first target test signal with highest signal quality in the at least one first test signal.

In an optional implementation, the to-be-charged device may measure signal quality of each received first test signal, and generates the first measurement result based on measured signal quality of the at least one first test signal. The to-be-charged device may directly use the signal quality of each first test signal as the first measurement result. For example, each time the to-be-charged device receives a first test signal, the to-be-charged device measures signal quality of the first test signal, and uses the signal quality of the first test signal as the first measurement result. Alternatively, after receiving the at least one first test signal and separately measuring the at least one first test signal to obtain signal quality of the at least one first test signal, the to-be-charged device may use signal quality of all first test signals in the at least one first test signal as the first measurement result.

In another optional implementation, the to-be-charged device may measure signal quality of each received first test signal, use a first test signal with highest signal quality in the at least one first test signal as the first target test signal, and use an identifier of the first target test signal as the first indication information. The first measurement result may include the first indication information.

S703: The to-be-charged device sends the first measurement result to the wireless charging apparatus through the transmission channel, and the wireless charging apparatus receives, through the transmission channel, the first measurement result sent by the to-be-charged device.

Optionally, when the first measurement result includes the signal quality of each of the at least one first test signal, each time the to-be-charged device receives a first test signal and measures signal quality of the first test signal, the to-be-charged device may use the signal quality of the first test signal as the first measurement result, and send the first measurement result to the wireless charging apparatus. In other words, the to-be-charged device needs to send at least one first measurement result to the wireless charging apparatus. Alternatively, after receiving the at least one first test signal and measures signal quality of the at least one first test signal, the to-be-charged device may use the signal quality of the at least one first test signal as the first measurement result. In other words, the to-be-charged device sends the first measurement result to the wireless charging apparatus after receiving all first test signals.

It should be noted that, that the first measurement result includes signal quality of one first test signal or signal quality of all first test signals is example description provided in this embodiment of this application. The first measurement result may alternatively include signal quality of a specified quantity of first test signals. In this case, the to-be-charged device may divide the signal quality of all the first test signals into a plurality of first measurement results to be fed back to the wireless charging apparatus. In other words, a manner of sending the first measurement result by the to-be-charged device is not limited in this embodiment of this application, and any method that can be used to feed back signal quality of at least one first test signal to the wireless charging apparatus is applicable.

S704: The wireless charging apparatus selects the waveform parameter from the at least one preset candidate waveform parameter based on the first measurement result.

In an optional implementation, when the first measurement result includes the signal quality of each of the at least one first test signal, the wireless charging apparatus determines the first target test signal with highest signal quality in the at least one first test signal based on the first measurement result, and uses a candidate waveform parameter corresponding to the first target test signal as the waveform parameter. For example, when the signal quality is receive power, the wireless charging apparatus may use a candidate waveform parameter corresponding to a first test signal with maximum receive power as the waveform parameter.

In another optional implementation, when the first measurement result includes the first indication information, the wireless charging apparatus may determine the first target test signal indicated by the first indication information, and use a candidate waveform parameter corresponding to the first target test signal as the waveform parameter.

Several manners of determining the channel information by the wireless charging apparatus in this embodiment of this application are described below.

Manner 1

FIG. 8 is a flowchart of a first channel information determining manner according to an embodiment of this application. The manner includes the following steps.

S801: The wireless charging apparatus sends a beacon signal to the to-be-charged device through the transmission channel, and the to-be-charged device receives, through the transmission channel, the beacon signal sent by the wireless charging apparatus.

Optionally, the beacon signal is used by the to-be-charged device to perform channel measurement, and the channel beacon may be a preconfigured or a protocol-agreed electromagnetic wave signal.

S802: The to-be-charged device performs channel measurement based on the received beacon signal to obtain the channel information.

Optionally, after receiving the beacon signal, the to-be-charged device calculates attenuation and a delay in a transmission process on the wireless channel based on the received beacon signal and the preconfigured or protocol-agreed beacon signal that is originally sent by the wireless charging apparatus, and uses the determined attenuation and delay as the channel information.

It should be noted that the to-be-charged device may calculate the channel information based on a channel measurement and calculation method, for example, the channel estimation method includes least square (least square, LS) channel estimation, minimum mean square error (minimum mean square error, MMSE) channel estimation, and maximum likelihood (maximum likelihood, ML) channel estimation. Using the LS channel estimation method as an example, the to-be-charged device may determine the channel information according to the following formula:

$$\widehat{H}_{LS} = (X^H X)^{-1} X^H Y$$

where $\hat{H}_{LS}$ is the channel information obtained based on the LS channel estimation method, X is the beacon signal sent by the wireless charging apparatus, and Y is the beacon signal received by the to-be-charged device.

S803: The to-be-charged device sends the channel information to the wireless charging apparatus through the transmission channel, and the wireless charging apparatus receives, through the transmission channel, the channel information sent by the to-be-charged device.

In an optional implementation, the to-be-charged device may send the channel information to the wireless charging apparatus by using a channel feedback signal.

Manner 2

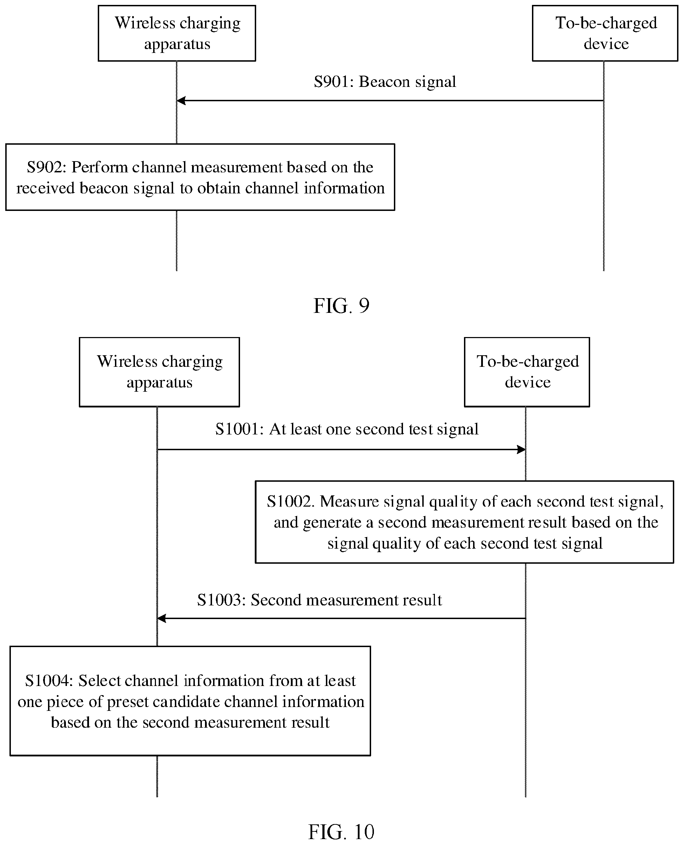

FIG. 9 is a flowchart of a second channel information determining manner according to an embodiment of this application. The manner includes the following steps.

S901: The to-be-charged device sends a beacon signal to the wireless charging apparatus through the transmission channel, and the wireless charging apparatus receives, through the transmission channel, the beacon signal sent by the to-be-charged device.

S902: The wireless charging apparatus performs channel measurement based on the received beacon signal to obtain the channel information.

It should be noted that for a manner of measuring the channel information by the wireless charging apparatus, refer to the manner of measuring the channel information by the to-be-charged device in Manner 1. Repeated parts are not described again.

Manner 3

FIG. 10 is a flowchart of a third channel information determining method according to an embodiment of this application. The manner includes the following steps.

S1001: The wireless charging apparatus sends at least one second test signal to the to-be-charged device through the transmission channel, and the to-be-charged device receives, through the transmission channel, the at least one second test signal sent by the wireless charging apparatus.

Optionally, at least one piece of candidate channel information may be preset, and the at least one piece of candidate channel information may be determined based on historical channel information stored in the wireless charging apparatus, or may be set based on experience of a skilled person. The at least one piece of candidate channel information is in a one-to-one correspondence with the at least one second test signal, and any second test signal is generated based on corresponding candidate channel information. In addition, it can be learned according to Formula 1 that an electromagnetic wave signal is determined by using the channel information and the waveform parameter. In this case, a waveform parameter may be preset. For example, a waveform parameter $\beta$ corresponding to each of the at least one second test signal is set to 1. In this case, each second test signal corresponds to a piece of candidate channel information, and the waveform parameter of each second test signal is $\beta = 1$.

S1002: The to-be-charged device measures signal quality of each second test signal, and generates a second measurement result based on the signal quality of each second test signal.

That the to-be-charged device measures the signal quality of each second test signal may be measuring receive power of each second test signal. The second measurement result includes the signal quality of each of the at least one second test signal; or the second measurement result includes second indication information, and the second indication information is used to indicate a second target test signal with highest signal quality in the at least one second test signal.

In an optional implementation, the to-be-charged device may measure signal quality of each received second test signal, and generates the second measurement result based on measured signal quality of the at least one second test signal. The to-be-charged device may directly use the signal quality of each second test signal as the second measurement result. For example, each time the to-be-charged device receives a second test signal, the to-be-charged device measures signal quality of the second test signal, and uses the signal quality of the second test signal as the second measurement result. Alternatively, after receiving the at least one second test signal and separately measuring the at least one second test signal to obtain signal quality of the at least one second test signal, the to-be-charged device may use signal quality of all second test signals in the at least one second test signal as the second measurement result.

In another optional implementation, the to-be-charged device may measure signal quality of each received second test signal, use a second test signal with highest signal quality in the at least one second test signal as the second target test signal, and use an identifier of the second target test signal as the second indication information. The second measurement result may include the second indication information.

S1003: The to-be-charged device sends the second measurement result to the wireless charging apparatus through the transmission channel, and the wireless charging apparatus receives, through the transmission channel, the second measurement result sent by the to-be-charged device.

Optionally, when the second measurement result includes the signal quality of each of the at least one second test signal, each time the to-be-charged device receives a second test signal and measures signal quality of the second test signal, the to-be-charged device may use the signal quality of the second test signal as the second measurement result, and send the second measurement result to the wireless charging apparatus. In other words, the to-be-charged device needs to send at least one second measurement result to the wireless charging apparatus. Alternatively, after receiving the at least one second test signal and measures signal quality of the at least one second test signal, the to-be-charged device may use the signal quality of the at least one second test signal as the second measurement result. In other words, the to-be-charged device sends the second measurement result to the wireless charging apparatus after receiving all second test signals.

It should be noted that, that the second measurement result includes signal quality of one second test signal or signal quality of all second test signals is example description provided in this embodiment of this application. The second measurement result may alternatively include signal quality of a specified quantity of second test signals. In this case, the to-be-charged device may divide the signal quality of all the second test signals into a plurality of second measurement results to be fed back to the wireless charging apparatus. In other words, a manner of sending the second measurement result by the to-be-charged device is not limited in this embodiment of this application, and any method that can be used to feed back signal quality of at least one second test signal to the wireless charging apparatus is applicable.

S1004: The wireless charging apparatus selects the channel information from the at least one piece of preset candidate channel information based on the second measurement result.

In an optional implementation, when the second measurement result is used to indicate the signal quality of each of the at least one second test signal, the wireless charging apparatus determines the second target test signal with highest signal quality in the at least one second test signal based on the second measurement result, and uses candidate channel information corresponding to the second target test signal as the channel information.

In another optional implementation, when the second measurement result includes the second indication information, the wireless charging apparatus may determine the second target test signal indicated by the second indication information, and use candidate channel information corresponding to the second target test signal as the channel information.

In addition, in an optional implementation of this application, a transceiver antenna of the wireless charging apparatus may be a transceiver antenna array, and a transmit antenna in the wireless charging apparatus and a receive antenna in the to-be-charged device form a transceiver antenna combination. In at least one antenna combination including a transceiver antenna array of the wireless charging apparatus and a transceiver antenna of the to-be-charged device, each antenna combination corresponds to a transmission channel, and for implementation of generating the target electromagnetic wave signal on each transmission channel, refer to the wireless charging method shown in FIG. 4. For example, in Manner 1 of determining channel information, the wireless charging apparatus may send at least one beacon signal by using at least one antenna in the transceiver antenna array of the wireless charging apparatus, and the to-be-charged device may receive the at least one beacon signal by using the transceiver antenna. In this way, channel information obtained after the to-be-charged device performs channel measurement based on the at least one beacon signal may include channel information of at least one transmission channel. In this case, the channel information may be, for example:

$$\widehat{H} = \begin{bmatrix} A_{11}e^{j\psi_{11}} & ... & A_{1M}e^{j\psi_{1M}} \\ \vdots & \ddots & \vdots \\ A_{N1}e^{j\psi_{N1}} & ... & A_{NM}e^{j\psi_{NM}} \end{bmatrix}$$

where $A_{ij}$ represents signal attenuation, included in the channel information, that is at an $i^{th}$ frequency and that is of a transmission channel corresponding to a $j^{th}$ transceiver antenna in M transceiver antennas included in the antenna array of the wireless charging apparatus; and $\psi_{ij}$ represents a transmission delay, included in the channel information, that is at the $i^{th}$ frequency and that is of the transmission channel corresponding to the $j^{th}$ transceiver antenna. In implementation, N frequencies may be obtained through division in advance, where $0 < i \leq N$, and $0 < j \leq M$.

After obtaining the channel information H, the wireless charging apparatus may generate the target electromagnetic wave signal according to the following Formula 2:

$$w_{nm} = e^{j\overline{\varphi_{nm}}}A_{nm}^{\beta}\sqrt{\frac{2P}{\sum_{n=1}^{N}\sum_{m=1}^{M}A_{nm}^{2\beta}}} \qquad \text{(Formula 2)}$$

where $w_{nm}$ represents an electromagnetic wave signal transmitted at an $n^{th}$ frequency on a transmission channel corresponding to an $m^{th}$ transceiver antenna, where $0 < n \leq N$, and $0 < m \leq M$; P is total transmit power of the wireless charging apparatus; $A_{mn}$ represents signal attenuation, included in the channel information, that is at an $i^{th}$ frequency and that is of the transmission channel corresponding to the $m^{th}$ transceiver antenna; $\psi_{mn}$ represents a transmission delay, included in the channel information, that is at the $n^{th}$ frequency and that is of the transmission channel corresponding to the $m^{th}$ transceiver antenna; and $\beta$ may be the waveform parameter determined based on the manner shown in FIG. 7.

In the foregoing manner, an electromagnetic wave signal sent in the wireless energy transmission phase can be determined for a transmission channel corresponding to each transceiver antenna in the antenna array of the wireless charging apparatus. Electromagnetic wave signals of different waveforms are sent by using different antennas, so that electromagnetic wave signals at some angles obtain constructive interference while electromagnetic wave signals at some other angles obtain destructive interference, so as to obtain an expected signal radiation mode, thereby implementing beamforming and improving power conversion efficiency of wireless charging perform on the to-be-charged device.

It can be understood that the transceiver antenna in the to-be-charged device may also be a transceiver antenna array. When both the transceiver antenna of the to-be-charged device and the transceiver antenna of the wireless charging apparatus are transceiver antenna arrays, the channel information may be three-dimensional channel information. The target electromagnetic wave signal determined by the wireless charging apparatus includes an electromagnetic wave signal transmitted on a transmission channel corresponding to an antenna combination including any transceiver antenna in the transceiver antenna array of the wireless charging apparatus and any transceiver antenna in the transceiver antenna array of the to-be-charged device. In addition, for a manner of determining the channel information and the waveform parameter, still refer to the method implementation described in the foregoing embodiment. Repeated parts are not described again.

It should be noted that a sequence of determining the channel information and the waveform parameter is not limited in this embodiment of this application. For example, the wireless charging apparatus may determine the waveform parameter based on the method shown in FIG. 7, and then determine the channel information based on any of the methods shown in FIG. 8 to FIG. 10. Alternatively, the wireless charging apparatus may determine the channel information based on any of the methods shown in FIG. 8 to FIG. 10, and then determine the waveform parameter based on the method shown in FIG. 7. In addition, if the wireless charging apparatus first determines the channel information and then determines the waveform parameter, when generating at least one first test signal, the wireless charging apparatus may use the channel information as channel information corresponding to the at least one first test signal. Similarly, when the wireless charging apparatus first determines the waveform parameter and then determines the channel information, if the channel information is determined in Manner 3 shown in FIG. 10, the wireless charging apparatus may use the determined waveform parameter as a waveform parameter of the at least one second test signal.

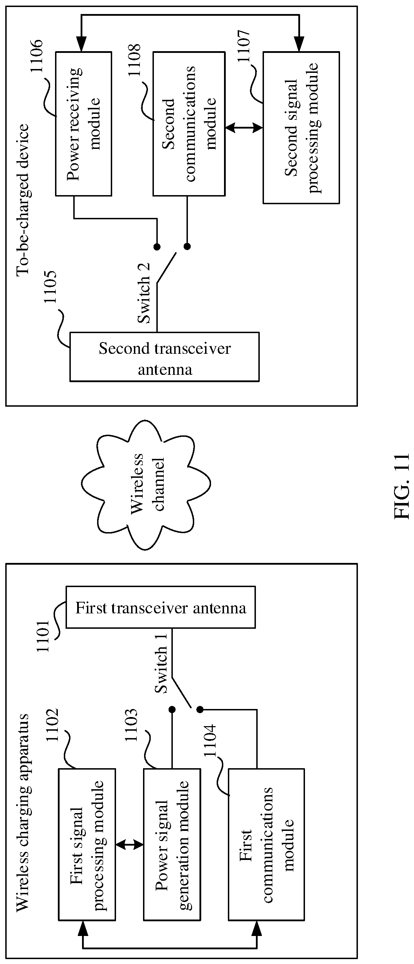

Possible structures of a wireless charging apparatus and a to-be-charged device in the embodiments of this application are described below. FIG. 11 is a schematic diagram of structures of a wireless charging apparatus and a to-be-charged device according to an embodiment of this application. Optionally, it can be learned from description of the wireless charging system shown in FIG. 1 that the wireless charging apparatus can simultaneously wirelessly charge at least one to-be-charged device. For ease of description, one to-be-charged device is shown as an example in FIG. 11.

Referring to FIG. 11, the wireless charging apparatus may include a first transceiver antenna 1101, a first signal processing module 1102, and a power signal generation module 1103. Optionally, the wireless charging apparatus may further include a first communications module 1104. A switch 1 may be switched to connect the first transceiver antenna 1101 and the first communications module 1104, or the switch 1 may be switched to connect the first transceiver antenna 1101 and the power signal generation module 1103. It should be noted that in implementation, the first communications module 1104 may be connected to a separate transceiver antenna different from the first transceiver antenna 1101. An electromagnetic wave signal transmitted by using the first communications module 1104 may be received or sent by the separate transceiver antenna, and the switch 1 does not need to be disposed.

Functions of the modules in the wireless charging apparatus are further described below.

The first signal processing module 1102 is configured to obtain, in a charging period, channel information of a transmission channel and a waveform parameter used to indicate a waveform of an electromagnetic wave signal, where the transmission channel is a channel between the wireless charging apparatus and a to-be-charged device at a first frequency, and the channel information includes signal attenuation and a transmission delay that are of an electromagnetic wave signal transmitted through the transmission channel.

The power signal generation module 1103 is configured to generate a target electromagnetic wave signal based on the channel information and the waveform parameter.

The first transceiver antenna 1101 is configured to send the target electromagnetic wave signal to the to-be-charged device through the transmission channel.

In an implementation, when obtaining the waveform parameter used to indicate a waveform of an electromagnetic wave signal, the first signal processing module 1102 is specifically configured to select the waveform parameter from at least one preset candidate waveform parameter.

In an implementation, the first transceiver antenna 1101 is further configured to: send at least one first test signal to the to-be-charged device through the transmission channel, where the at least one first test signal is in a one-to-one correspondence with the at least one candidate waveform parameter, and any first test signal is generated based on a corresponding candidate waveform parameter; and receive, through the transmission channel, a first measurement result sent by the to-be-charged device, where the first measurement result is obtained by measuring signal quality of the at least one first test signal by the to-be-charged device.

When selecting the waveform parameter from the at least one preset candidate waveform parameter, the first signal processing module 1102 is specifically configured to select the waveform parameter from the at least one candidate waveform parameter based on the first measurement result.

Optionally, after receiving the first measurement result, the first transceiver antenna 1101 may send the first measurement result to the first communications module 1104, and the first communications module 1104 sends the first measurement result to the first signal processing module 1102.

In an implementation, the first measurement result includes the signal quality of the at least one first test signal. When selecting the waveform parameter from the at least one candidate waveform parameter based on the first measurement result, the first signal processing module 1102 is specifically configured to: determine a first target test signal with highest signal quality based on the signal quality of the at least one first test signal included in the first measurement result; and determine, from the at least one candidate waveform parameter, a candidate waveform parameter corresponding to the first target test signal as the waveform parameter.

Alternatively, the first measurement result includes first indication information, and the first indication information is used to indicate a first target test signal with highest signal quality in the at least one first test signal. When selecting the waveform parameter from the at least one candidate waveform parameter based on the first measurement result, the first signal processing module 1102 is specifically configured to: determine the first target test signal indicated by the first indication information; and determine, from the at least one candidate waveform parameter, a candidate waveform parameter corresponding to the first target test signal as the waveform parameter.

In an implementation, when obtaining the channel information of the transmission channel, the first signal processing module 1102 is specifically configured to: perform a channel measurement process on the transmission channel to obtain the channel information; or select the channel information from at least one piece of preset candidate channel information.

Optionally, the first communications module 1104 is further configured to generate a beacon signal. The beacon signal is used by the to-be-charged device to perform channel measurement.

In an implementation, the first transceiver antenna 1101 is further configured to: send the beacon signal to the to-be-charged device through the transmission channel; and receive, through the transmission channel, the channel information sent by the to-be-charged device.

In an implementation, the first transceiver antenna 1101 is further configured to receive, through the transmission channel, the beacon signal sent by the to-be-charged device.

When performing the channel measurement process on the transmission channel to obtain the channel information, the first signal processing module 1102 is specifically configured to perform channel measurement based on the beacon signal to obtain the channel information.

In an implementation, the first transceiver antenna 1101 is further configured to: send at least one second test signal to the to-be-charged device through the transmission channel, where the at least one second test signal is in a one-to-one correspondence with the at least one piece of candidate channel information, and any second test signal is generated based on corresponding candidate channel information; and send the at least one second test signal to the to-be-charged device through the transmission channel, where the at least one second test signal is in a one-to-one correspondence with the at least one piece of candidate channel information, and any second test signal is generated based on corresponding candidate channel information.

When selecting the channel information from the at least one piece of preset candidate channel information, the first signal processing module 1102 is specifically configured to select the channel information from the at least one piece of candidate channel information based on the second measurement result.

Optionally, after receiving the first measurement result, the first transceiver antenna 1101 may send the first measurement result to the first communications module 1104, and the first communications module 1104 sends the first measurement result to the first signal processing module 1102.

In an implementation, the second measurement result includes the signal quality of the at least one second test signal. When selecting the channel information from the at least one piece of candidate channel information based on the second measurement result, the first signal processing module 1102 is specifically configured to: determine a second target test signal with highest signal quality based on the signal quality of the at least one second test signal included in the second measurement result; and determine, from the at least one piece of candidate channel information, candidate channel information corresponding to the second target test signal as the channel information.

Alternatively, the second measurement result includes second indication information, and the second indication information is used to indicate a second target test signal with highest signal quality in the at least one second test signal. When selecting the channel information from the at least one piece of candidate channel information based on the second measurement result, the first signal processing module 1102 is specifically configured to: determine the second target test signal indicated by the second indication information; and determine, from the at least one piece of candidate channel information, candidate channel information corresponding to the second target test signal as the channel information.

The waveform parameter is an exponential factor for an exponential operation performed on the signal attenuation in the channel information in a process of generating the target electromagnetic wave signal.

The target electromagnetic wave signal meets the following formula:

$$w_n = e^{j\overline{\varphi_n}} A_n^{\beta} \sqrt{\frac{2P}{\sum_{n=1}^{N} A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus, and $\beta$ is the waveform parameter.

In an implementation, the transmission channel corresponds to a transceiver antenna combination, and the transceiver antenna combination includes one transmit antenna in the wireless charging apparatus and one receive antenna in the to-be-charged device.

In an implementation, the first transceiver antenna 1101 is further configured to: before the first signal processing module 1102 obtains the channel information of the transmission channel and the waveform parameter used to indicate a waveform of an electromagnetic wave signal, receive, through the transmission channel, charging request information sent by the to-be-charged device.

It should be noted that the power signal generation module 1103 and the first communications module 1104 each may include a mixer, an oscillator, and a power amplifier, which are configured to process a baseband signal of each of electromagnetic wave signals (such as the target electromagnetic wave signal, the at least one first test signal, the at least one second test signal, and the beacon signal) generated in the two modules into a high frequency signal that can be transmitted on the wireless channel, and may be further configured to process a high frequency signal received by the first transceiver antenna 1101 into a baseband signal.

Referring to FIG. 11, the to-be-charged device may include a second transceiver antenna 1105 and a power receiving module 1106. Optionally, the to-be-charged device may further include a second signal processing module 1107 and a second communications module 1108. A switch 2 may be switched to connect the second transceiver antenna 1105 and the second communications module 1108; or the switch 2 may be switched to connect the second transceiver antenna 1105 and the power receiving module 1103. It should be noted that in implementation, the second communications module 1108 may be connected to a separate transceiver antenna different from the second transceiver antenna 1105. An electromagnetic wave signal transmitted by using the second communications module 1108 may be received or sent by the separate transceiver antenna, and the switch 2 does not need to be disposed.

Functions of the modules in the to-be-charged device are further described below.

The second transceiver antenna 1105 is configured to receive, through a transmission channel, a target electromagnetic wave signal sent by the wireless charging apparatus, where the target electromagnetic wave signal is generated by the wireless charging apparatus based on obtained channel information of the transmission channel and an obtained waveform parameter used to indicate a waveform of an electromagnetic wave signal.

The power receiving module 1106 is configured to: convert the target electromagnetic wave signal into a direct current signal, and perform charging based on the direct current signal.

In an implementation, the second transceiver antenna 1105 is further configured to: receive, through the transmission channel, at least one first test signal sent by the wireless charging apparatus, where the at least one first test signal is in a one-to-one correspondence with at least one candidate waveform parameter, and any first test signal is generated based on a corresponding candidate waveform parameter; and send a first measurement result to the wireless charging apparatus through the transmission channel, so that the wireless charging apparatus selects the waveform parameter from the at least one candidate waveform parameter based on the first measurement result.

The power receiving module 1106 is further configured to measure signal quality of the at least one first test signal.

The second signal processing module 1107 is configured to generate the first measurement result based on the signal quality of the at least one first test signal.

In an implementation, the first measurement result includes the signal quality of the at least one first test signal; or the first measurement result includes first indication information, and the first indication information is used to indicate a first target test signal with highest signal quality in the at least one first test signal.

In an implementation, the second transceiver antenna 1105 is further configured to: receive, through the transmission channel, a beacon signal sent by the wireless charging apparatus; and send the channel information to the wireless charging apparatus through the transmission channel.

The second signal processing module 1107 is further configured to perform channel measurement based on the beacon signal to obtain the channel information.

In an implementation, the second transceiver antenna 1105 is further configured to send a beacon signal to the wireless charging apparatus through the transmission channel, where the beacon signal is used by the wireless charging apparatus to perform channel measurement.

Optionally, the second communications module 1108 is configured to generate the beacon signal.

In an implementation, the second transceiver antenna 1105 is further configured to: receive, through the transmission channel, at least one second test signal sent by the wireless charging apparatus, where the at least one second test signal is in a one-to-one correspondence with at least one piece of candidate channel information, and any second test signal is generated based on corresponding candidate channel information; and send a second measurement result to the wireless charging apparatus through the transmission channel, so that the wireless charging apparatus selects the channel information from the at least one piece of candidate channel information based on the second measurement result.

The power receiving module 1106 is further configured to measure signal quality of each of the at least one second test signal.

The second signal processing module 1107 is further configured to generate the second measurement result based on the signal quality of the at least one second test signal.

Optionally, after determining the second measurement result, the second signal processing module 1107 may send the second measurement result to the second communications module 1108, and the second communications module sends the second measurement result to the second transceiver antenna 1105.

In an implementation, the second measurement result includes the signal quality of the at least one second test signal; or the second measurement result includes second indication information, and the second indication information is used to indicate a second target test signal with highest signal quality in the at least one second test signal.

In an implementation, the transmission channel corresponds to a transceiver antenna combination, and the transceiver antenna combination includes one transmit antenna in the wireless charging apparatus and one receive antenna in the to-be-charged device.

In an implementation, the second signal processing module 1107 is further configured to determine that current power is greater than power required for sending charging request information.

The second transceiver antenna 1105 is further configured to send the charging request information to the wireless charging apparatus.

It should be noted that the power receiving module 1106 and the second communications module 1108 each may include a mixer, an oscillator, and a power amplifier, which are configured to process a baseband signal of a received electromagnetic wave signal into a high frequency signal that can be transmitted on the wireless channel, and may be further configured to process a high frequency signal received by the second transceiver antenna 1105 into a baseband signal.

A wireless charging method provided in the embodiments of this application is further described below by using several specific instances with reference to the structures of the wireless charging apparatus and the to-be-charged device shown in FIG. 11.

Instance 1

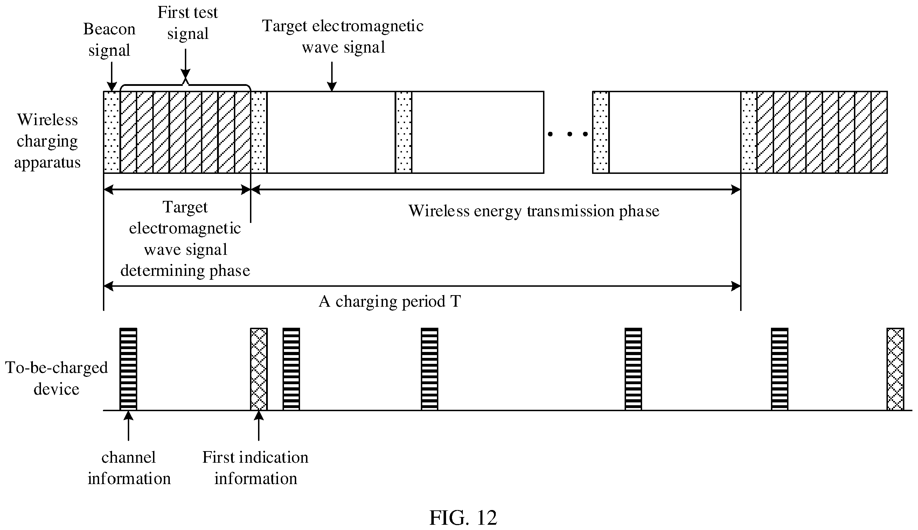

In an optional implementation, in a wireless charging system provided in this embodiment of this application, for a frame structure of an electromagnetic wave signal transmitted between a wireless charging apparatus and a to-be-charged device, refer to FIG. 12. An example in which duration of a charging period is T is shown in FIG. 12. A charging period includes a target electromagnetic wave signal determining phase and a wireless energy transmission phase. In the target electromagnetic wave signal determining phase, the wireless charging apparatus sends a beacon signal and at least one first test signal, and the to-be-charged device sends channel information and a first measurement result to the wireless charging apparatus. The wireless charging apparatus determines a waveform parameter based on the first measurement result, and determines a target electromagnetic wave signal based on the channel information and the waveform parameter. In the wireless energy transmission phase, the wireless charging apparatus sends the target electromagnetic wave signal to the to-be-charged device. The to-be-charged device receives the target electromagnetic wave signal, converts the target electromagnetic wave signal into a direct current signal, and charges the to-be-charged device based on the direct current signal.

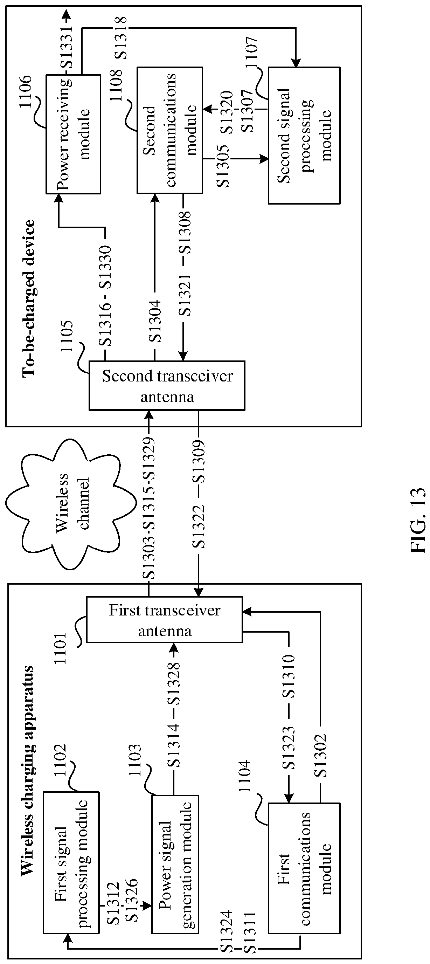

FIG. 13 is a flowchart of a wireless charging method according to Instance 1. The instance includes the following steps.

S1301: The wireless charging apparatus switches the switch 1 to the first communications module 1104, and the first communications module 1104 generates a beacon signal.

S1302: The first communications module 1104 sends the beacon signal to the first transceiver antenna 1101.

S1303: The first transceiver antenna 1101 sends the beacon signal to the second transceiver antenna 1105 of the to-be-charged device.

S1304: The to-be-charged device switches the switch 2 to the second communications module 1108, and the second transceiver antenna 1105 sends the beacon signal to the second communications module 1108.

S1305: The second communications module 1108 sends the beacon signal to the second signal processing module 1107.

S1306: The second signal processing module 1107 calculates channel information based on the received beacon signal and the preconfigured or protocol-agreed beacon signal that is originally sent by the wireless charging apparatus.

S1307: The second signal processing module 1107 sends the channel information to the second communications module 1108.

S1308: The second communications module 1108 sends the channel information to the second transceiver antenna 1105.

S1309: The second transceiver antenna 1105 sends the channel information to the first transceiver antenna 1101.

S1310: The first transceiver antenna 1101 sends the channel information to the first communications module 1104.

S1311: The first communications module 1104 sends the channel information to the first signal processing module 1102.

S1312: The first signal processing module 1102 sends the channel information to the power signal generation module 1103.

S1313: The wireless charging apparatus switches the switch 1 to the power signal generation module 1103, and the power signal generation module 1103 generates at least one first test signal based on the channel information and at least one candidate waveform parameter.

S1314: The power signal generation module 1103 sends the at least one first test signal to the first transceiver antenna 1101.

S1315: The first transceiver antenna 1101 sends the at least one first test signal to the second transceiver antenna 1105.

S1316: The to-be-charged device switches the switch 2 to the power receiving module 1106, and the second transceiver antenna 1105 sends the at least one first test signal to the power receiving module 1106.

S1317: The power receiving module 1106 measures receive power of the at least one first test signal.

S1318: The power receiving module 1106 sends the measured receive power of the at least one first test signal to the second signal processing module 1107.

S1319: The second signal processing module 1107 determines a first measurement result based on the receive power of the at least one first test signal.

In an optional implementation, after completing measurement of receive power of each of the at least one first test signal, the power receiving module 1106 may send the receive power of the at least one first test signal to the second signal processing module 1107. The second signal processing module 1107 determines maximum receive power in the receive power of the at least one first test signal, and uses an identifier of a first target test signal with the maximum receive power as first indication information. The first measurement result includes the first indication information.

In another optional implementation, each time the power receiving module 1106 receives a first test signal and measures receive power of the first test signal, the power receiving module 1106 sends the receive power of the first test signal to the second signal processing module 1107. The second signal processing module 1107 uses the received receive power of the first test signal as the first measurement result.

S1320: The second signal processing module 1107 sends the first measurement result to the second communications module 1108.

S1321: The second communications module 1108 sends the first measurement result to the second transceiver antenna 1105.

S1322: The second transceiver antenna 1105 sends the first measurement result to the first transceiver antenna 1101.

S1323: The wireless charging apparatus switches the switch 1 to the first communications module 1104, and the first transceiver antenna 1101 sends the first measurement result to the first communications module 1104.

S1324: The first communications module 1104 sends the first measurement result to the first signal processing module 1102.

S1325: The first signal processing module 1102 selects a waveform parameter from the at least one candidate waveform parameter based on the first measurement result.

S1326: The first signal processing module 1102 sends the waveform parameter to the power signal generation module 1103.

S1327: The power signal generation module 1103 generates a target electromagnetic wave signal based on the waveform parameter and the channel information.

S1328: The power signal generation module 1103 sends the target electromagnetic wave signal to the first transceiver antenna 1101.

S1329: The first transceiver antenna 1101 sends the target electromagnetic wave signal to the second transceiver antenna 1105.

S1330: The second transceiver antenna 1105 sends the target electromagnetic wave signal to the power receiving module 1106.

S1331: The power receiving module 1106 converts the target electromagnetic wave signal into a direct current signal, and charges the to-be-charged device based on the direct current signal.

Instance 2

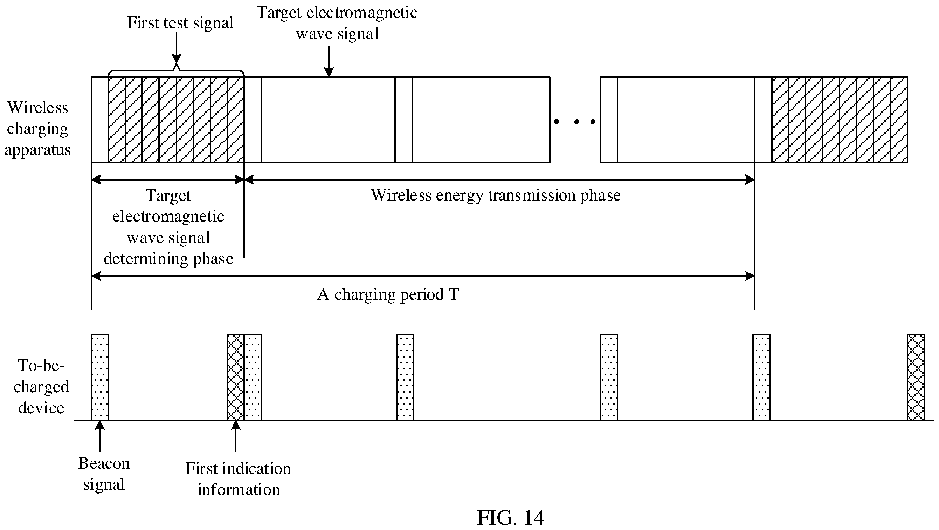

In an optional implementation, in a wireless charging system provided in this embodiment of this application, for a frame structure of an electromagnetic wave signal transmitted between a wireless charging apparatus and a to-be-charged device, refer to FIG. 14. An example in which duration of a charging period is T is shown in FIG. 14. A charging period includes a target electromagnetic wave signal determining phase and a wireless energy transmission phase. In the target electromagnetic wave signal determining phase, the to-be-charged device sends a beacon signal, and the wireless charging apparatus receives the beacon signal sent by the to-be-charged device, and calculates channel information based on the received beacon signal. The wireless charging apparatus sends at least one first test signal. After receiving the at least one first test signal, the to-be-charged device determines a first measurement result, and sends the first measurement result to the wireless charging apparatus. The wireless charging apparatus determines a waveform parameter based on the first measurement result, and determines a target electromagnetic wave signal based on the channel information and the waveform parameter. In the wireless energy transmission phase, the wireless charging apparatus sends the target electromagnetic wave signal to the to-be-charged device. The to-be-charged device receives the target electromagnetic wave signal, converts the target electromagnetic wave signal into a direct current signal, and charges the to-be-charged device based on the direct current signal.

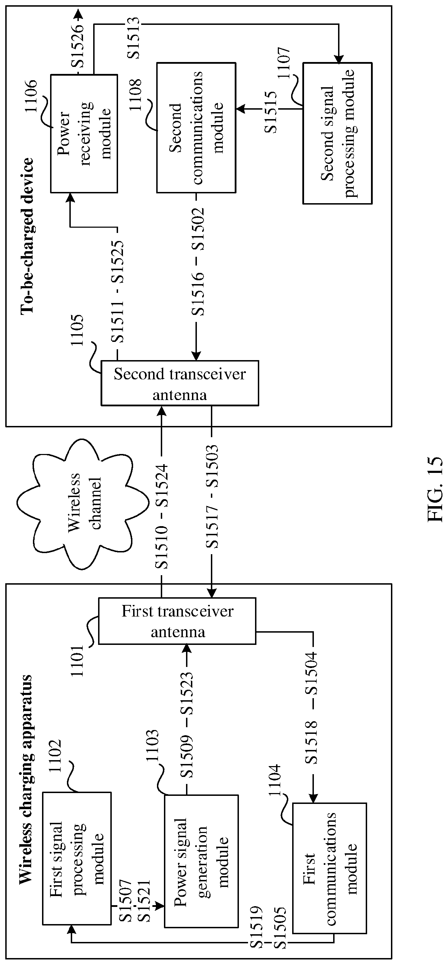

FIG. 15 is a flowchart of a wireless charging method according to Instance 2. The instance includes the following steps.

S1501: The to-be-charged device switches the switch 2 to the second communications module 1108, and the second communications module 1108 generates a beacon signal.

S1502: The second communications module 1108 sends the beacon signal to the second transceiver antenna 1105.

S1503: The second transceiver antenna 1105 sends the beacon signal to the first transceiver antenna 1101.

S1504: The wireless charging apparatus switches the switch 1 to the first communications module 1104, and the first transceiver antenna 1101 sends the beacon signal to the first communications module 1104.

S1505: The first communications module 1104 sends the beacon signal to the first signal processing module 1102.

S1506: The first signal processing module 1102 calculates channel information based on the received beacon signal and the preconfigured or protocol-agreed beacon signal that is originally sent by the wireless charging apparatus.

S1507: The first signal processing module 1102 sends the channel information to the power signal generation module 1103.

S1508: The wireless charging apparatus switches the switch 1 to the power signal generation module 1103, and the power signal generation module 1103 generates at least one first test signal based on the channel information and at least one candidate waveform parameter.

S1509: The power signal generation module 1103 sends the at least one first test signal to the first transceiver antenna 1101.

S1510: The first transceiver antenna 1101 sends the at least one first test signal to the second transceiver antenna 1105.

S1511: The to-be-charged device switches the switch 2 to the power receiving module 1106, and the second transceiver antenna 1105 sends the at least one first test signal to the power receiving module 1106.

S1512: The power receiving module 1106 measures receive power of the at least one first test signal.

S1513: The power receiving module 1106 sends the measured receive power of the at least one first test signal to the second signal processing module 1107.

S1514: The second signal processing module 1107 determines a first measurement result based on the receive power of the at least one first test signal.

For details, refer to the implementation of determining the first measurement result in S1319 in the wireless charging method shown in FIG. 13. Repeated parts are not described again.

S1515: The second signal processing module 1107 sends the first measurement result to the second communications module 1108.

S1516: The second communications module 1108 sends the first measurement result to the second transceiver antenna 1105.

S1517: The second transceiver antenna 1105 sends the first measurement result to the first transceiver antenna 1101.

S1518: The wireless charging apparatus switches the switch 1 to the first communications module 1104, and the first transceiver antenna 1101 sends the first measurement result to the first communications module 1104.

S1519: The first communications module 1104 sends the first measurement result to the first signal processing module 1102.

S1520: The first signal processing module 1102 selects a waveform parameter from the at least one candidate waveform parameter based on the first measurement result.

S1521: The first signal processing module 1102 sends the waveform parameter to the power signal generation module 1103.

S1522: The power signal generation module 1103 generates a target electromagnetic wave signal based on the waveform parameter and the channel information.

S1523: The power signal generation module 1103 sends the target electromagnetic wave signal to the first transceiver antenna 1101.

S1524: The first transceiver antenna 1101 sends the target electromagnetic wave signal to the second transceiver antenna 1105.

S1525: The second transceiver antenna 1105 sends the target electromagnetic wave signal to the power receiving module 1106.

S1526: The power receiving module 1106 converts the target electromagnetic wave signal into a direct current signal, and charges the to-be-charged device based on the direct current signal.

Instance 3

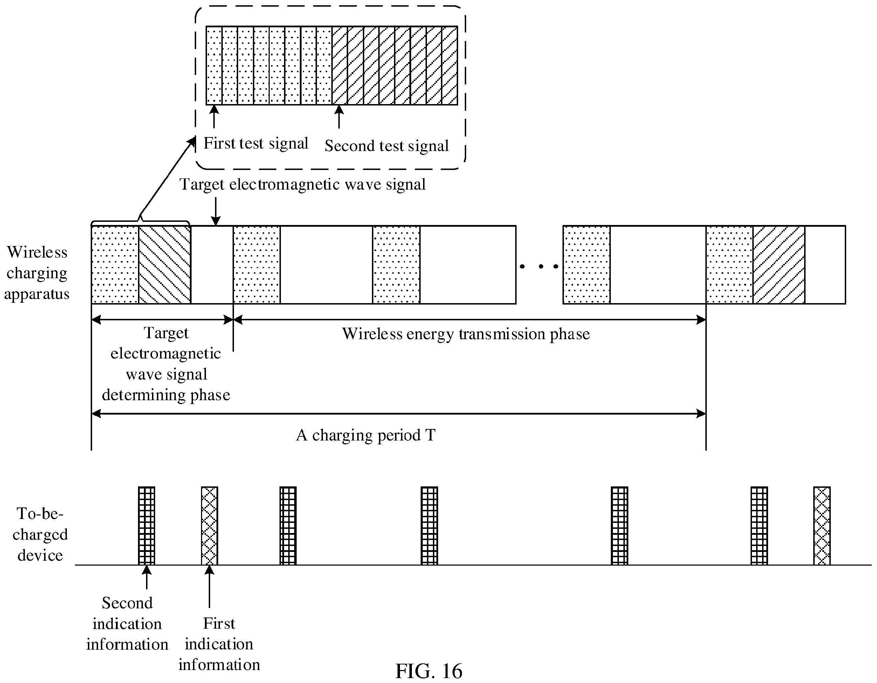

In an optional implementation, in a wireless charging system provided in this embodiment of this application, for a frame structure of an electromagnetic wave signal transmitted between a wireless charging apparatus and a to-be-charged device, refer to FIG. 16. An example in which duration of a charging period is T is shown in FIG. 16. A charging period includes a target electromagnetic wave signal determining phase and a wireless energy transmission phase. In the target electromagnetic wave signal determining phase, the to-be-charged device sends at least one second test signal. After receiving the at least one second test signal, the to-be-charged device determines a second measurement result, and sends the second measurement result to the wireless charging apparatus. The wireless charging apparatus determines channel information based on the second measurement result. The wireless charging apparatus sends at least one first test signal. After receiving the at least one first test signal, the to-be-charged device determines a first measurement result, and sends the first measurement result to the wireless charging apparatus. The wireless charging apparatus determines a waveform parameter based on the first measurement result, and determines a target electromagnetic wave signal based on the channel information and the waveform parameter. In the wireless energy transmission phase, the wireless charging apparatus sends the target electromagnetic wave signal to the to-be-charged device. The to-be-charged device receives the target electromagnetic wave signal, converts the target electromagnetic wave signal into a direct current signal, and charges the to-be-charged device based on the direct current signal.

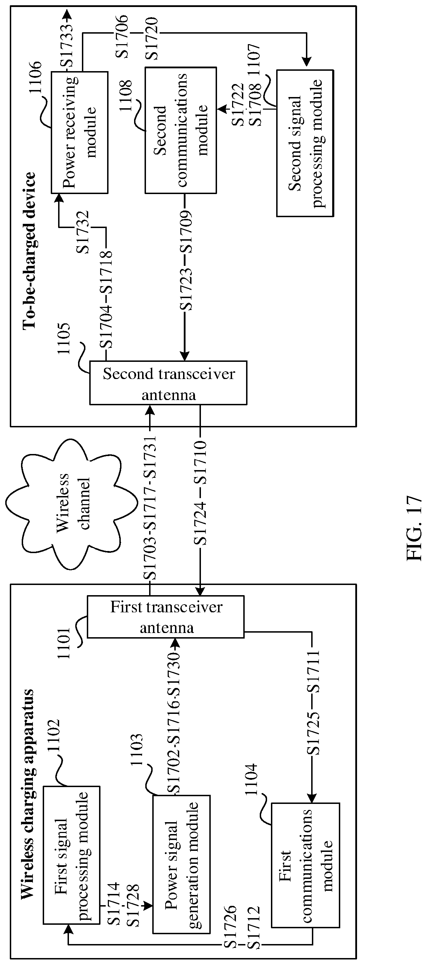

FIG. 17 is a flowchart of a wireless charging method according to Instance 2. The instance includes the following steps.

S1701: The wireless charging apparatus switches the switch 1 to the power signal generation module 1103, and the power signal generation module 1103 determines at least one second test signal based on at least one piece of specified channel information.

S1702: The power signal generation module 1103 sends the at least one second test signal to the first transceiver antenna 1101.

S1703: The first transceiver antenna 1101 sends the at least one second test signal to the second transceiver antenna 1105.

S1704: The to-be-charged device switches the switch 2 to the power receiving module 1106, and the second transceiver antenna 1105 sends the at least one second test signal to the power receiving module 1106.

S1705: The power receiving module 1106 measures receive power of the at least one second test signal.

S1706: The power receiving module 1106 sends the measured receive power of the at least one second test signal to the first signal processing module 1102.

S1707: The first signal processing module 1102 determines a second measurement result based on the receive power of the at least one second test signal.

In an optional implementation, after completing measurement of receive power of each of the at least one second test signal, the power receiving module 1106 may send the receive power of the at least one second test signal to the second signal processing module 1107. The second signal processing module 1107 determines maximum receive power in the receive power of the at least one second test signal, and uses an identifier of a second target test signal with the maximum receive power as second indication information. The second measurement result includes the second indication information.

In another optional implementation, each time the power receiving module 1106 receives a second test signal and measures receive power of the second test signal, the power receiving module 1106 sends the receive power of the second test signal to the second signal processing module 1107. The second signal processing module 1107 uses the received receive power of the second test signal as the second measurement result.

S1708: The first signal processing module 1102 sends the second measurement result to the second communications module 1108.

S1709: The second communications module 1108 sends the second measurement result to the second transceiver antenna 1105.

S1710: The second transceiver antenna 1105 sends the second measurement result to the first transceiver antenna 1101.

S1711: The wireless charging apparatus switches the switch 1 to the first communications module 1104, and the first transceiver antenna 1101 sends the second measurement result to the first communications module 1104.

S1712: The first communications module 1104 sends the second measurement result to the first signal processing module 1102.

S1713: The first signal processing module 1102 selects channel information from the at least one piece of candidate channel information based on the second measurement result.

S1714: The first signal processing module 1102 sends the channel information to the power signal generation module 1103.

S1715: The wireless charging apparatus switches the switch 1 to the power signal generation module 1103, and the power signal generation module 1103 generates at least one first test signal based on the channel information and at least one candidate waveform parameter.

S1716: The power signal generation module 1103 sends the at least one first test signal to the first transceiver antenna 1101.

S1717: The first transceiver antenna 1101 sends the at least one first test signal to the second transceiver antenna 1105.

S1718: The to-be-charged device switches the switch 2 to the power receiving module 1106, and the second transceiver antenna 1105 sends the at least one first test signal to the power receiving module 1106.

S1719: The power receiving module 1106 measures receive power of the at least one first test signal.

S1720: The power receiving module 1106 sends the measured receive power of the at least one first test signal to the second signal processing module 1107.

S 1721: The second signal processing module 1107 determines a first measurement result based on the receive power of the at least one first test signal.

For details, refer to the implementation of determining the first measurement result in S1319 in the wireless charging method shown in FIG. 13. Repeated parts are not described again.

S1722: The second signal processing module 1107 sends the first measurement result to the second communications module 1108.

S1723: The second communications module 1108 sends the first measurement result to the second transceiver antenna 1105.

S1724: The second transceiver antenna 1105 sends the first measurement result to the first transceiver antenna 1101.

S1725: The wireless charging apparatus switches the switch 1 to the first communications module 1104, and the first transceiver antenna 1101 sends the first measurement result to the first communications module 1104.

S1726: The first communications module 1104 sends the first measurement result to the first signal processing module 1102.

S1727: The first signal processing module 1102 selects a waveform parameter from the at least one candidate waveform parameter based on the first measurement result.

S1728: The first signal processing module 1102 sends the waveform parameter to the power signal generation module 1103.

S1729: The power signal generation module 1103 generates a target electromagnetic wave signal based on the waveform parameter and the channel information.

S1730: The power signal generation module 1103 sends the target electromagnetic wave signal to the first transceiver antenna 1101.

S1731: The first transceiver antenna 1101 sends the target electromagnetic wave signal to the second transceiver antenna 1105.

S1732: The second transceiver antenna 1105 sends the target electromagnetic wave signal to the power receiving module 1106.

S1733: The power receiving module 1106 converts the target electromagnetic wave signal into a direct current signal, and charges the to-be-charged device based on the direct current signal.

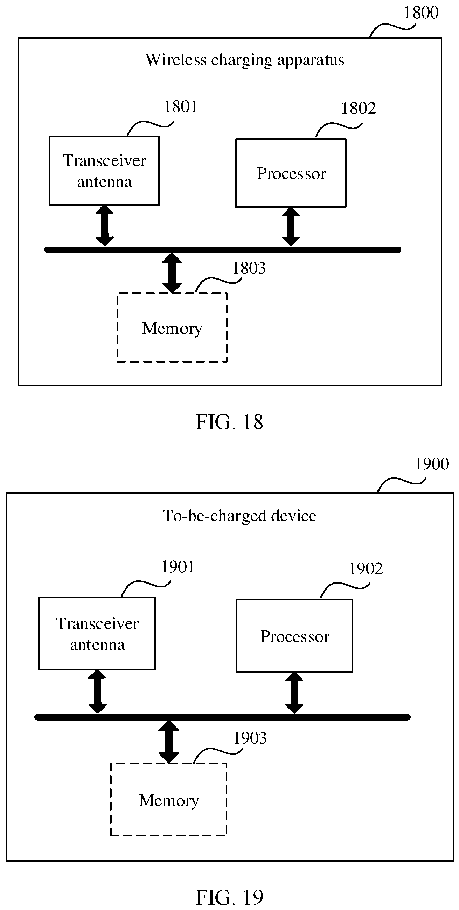

Based on the same technical concept, this application further provides a wireless charging apparatus 1800. FIG. 18 is a schematic diagram of a structure of the wireless charging apparatus 1800 according to an embodiment of this application. The wireless charging apparatus 1800 may be the wireless charging apparatus in the wireless charging system shown in FIG. 1, and may implement functions of the wireless charging apparatus in the wireless charging methods shown in FIG. 4, FIG. 13, FIG. 15, and FIG. 17. Referring to FIG. 18, the wireless charging apparatus 1800 includes a transceiver antenna 1801 and a processor 1802. Further, optionally, the wireless charging apparatus 1800 may include a memory 1803. The transceiver antenna 1801, the processor 1802, and the memory 1803 are connected to each other. It should be noted that the wireless charging apparatus 1800 may include at least one processor 1802 and at least one memory 1803. An example in which the wireless charging apparatus 1800 includes one processor 1802 and one memory 1803 is shown in FIG. 18.

The transceiver antenna 1801 is configured to receive and send a signal to communicate and interact with another device. For example, the transceiver antenna 1801 may be a transceiver antenna array including at least one transceiver antenna.

The memory 1803 is configured to store instructions, and the processor 1802 is configured to execute the instructions stored in the memory 1803. The memory 1803 stores program code, and the processor 1802 may invoke the program code stored in the memory 1803 to perform the wireless charging method provided in the embodiments of this application.

The processor 1802 is configured to: obtain, in a charging period, channel information of a transmission channel and a waveform parameter used to indicate a waveform of an electromagnetic wave signal, where the transmission channel is a channel between the wireless charging apparatus and a to-be-charged device at a first frequency, and the channel information includes signal attenuation and a transmission delay that are of an electromagnetic wave signal transmitted through the transmission channel; generate a target electromagnetic wave signal based on the channel information and the waveform parameter; and send the target electromagnetic wave signal to the to-be-charged device through the transmission channel by using the transceiver antenna 1801.

In an implementation, when obtaining the waveform parameter used to indicate a waveform of an electromagnetic wave signal, the processor 1802 is specifically configured to select the waveform parameter from at least one preset candidate waveform parameter.

In an implementation, when selecting the waveform parameter from the at least one preset candidate waveform parameter, the processor 1802 is specifically configured to:
send at least one first test signal to the to-be-charged device through the transmission channel by using the transceiver antenna 1801, where the at least one first test signal is in a one-to-one correspondence with the at least one candidate waveform parameter, and any first test signal is generated based on a corresponding candidate waveform parameter; receive, through the transmission channel by using the transceiver antenna 1801, a first measurement result sent by the to-be-charged device, where the first measurement result is obtained by measuring signal quality of the at least one first test signal by the to-be-charged device; and select the waveform parameter from the at least one candidate waveform parameter based on the first measurement result.

In an implementation, the first measurement result includes the signal quality of the at least one first test signal. When selecting the waveform parameter from the at least one candidate waveform parameter based on the first measurement result, the processor 1802 is specifically configured to: determine a first target test signal with highest signal quality based on the signal quality of the at least one first test signal included in the first measurement result; and determine, from the at least one candidate waveform parameter, a candidate waveform parameter corresponding to the first target test signal as the waveform parameter.

Alternatively, the first measurement result includes first indication information, and the first indication information is used to indicate a first target test signal with highest signal quality in the at least one first test signal. When selecting the waveform parameter from the at least one candidate waveform parameter based on the first measurement result, the processor 1802 is specifically configured to: determine the first target test signal indicated by the first indication information; and determine, from the at least one candidate waveform parameter, a candidate waveform parameter corresponding to the first target test signal as the waveform parameter.

In an implementation, when obtaining the channel information of the transmission channel, the processor 1802 is specifically configured to: perform a channel measurement process on the transmission channel to obtain the channel information; or select the channel information from at least one piece of preset candidate channel information.

In an implementation, when performing the channel measurement process on the transmission channel to obtain the channel information, the processor 1802 is specifically configured to: send a beacon signal to the to-be-charged device through the transmission channel by using the transceiver antenna 1801, where the beacon signal is used by the to-be-charged device to perform channel measurement; and receive, by using the transceiver antenna 1801, the channel information sent by the to-be-charged device through the transmission channel.

In an implementation, when performing the channel measurement process on the transmission channel to obtain the channel information, the processor 1802 is specifically configured to: receive, by using the transceiver antenna 1801, a beacon signal sent by the to-be-charged device through the transmission channel; and perform channel measurement based on the beacon signal to obtain the channel information.

In an implementation, when selecting the channel information from the at least one piece of preset candidate channel information, the processor 1802 is specifically configured to: send at least one second test signal to the to-be-charged device through the transmission channel by using the transceiver antenna 1801, where the at least one second test signal is in a one-to-one correspondence with the at least one piece of candidate channel information, and any second test signal is generated based on corresponding candidate channel information; receive, by using the transceiver antenna 1801, a second measurement result sent by the to-be-charged device through the transmission channel, where the second measurement result is obtained by measuring signal quality of the at least one second test signal by the to-be-charged device; and select the channel information from the at least one piece of candidate channel information based on the second measurement result.

In an implementation, the second measurement result includes the signal quality of the at least one second test signal. When selecting the channel information from the at least one piece of candidate channel information based on the second measurement result, the processor 1802 is specifically configured to: determine a second target test signal with highest signal quality based on the signal quality of the at least one second test signal included in the second measurement result; and determine, from the at least one piece of candidate channel information, candidate channel information corresponding to the second target test signal as the channel information. Alternatively, the second measurement result includes second indication information, and the second indication information is used to indicate a second target test signal with highest signal quality in the at least one second test signal. When selecting the channel information from the at least one piece of candidate channel information based on the second measurement result, the processor 1802 is specifically configured to: determine the second target test signal indicated by the second indication information; and determine, from the at least one piece of candidate channel information, candidate channel information corresponding to the second target test signal as the channel information.

The waveform parameter is an exponential factor for an exponential operation performed on the signal attenuation in the channel information in a process of generating the target electromagnetic wave signal.

The target electromagnetic wave signal meets the following formula:

$$w_n = e^{j\overline{\varphi_n}} A_n^{\beta} \sqrt{\frac{2P}{\sum_{n=1}^{N} A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus, and $\beta$ is the waveform parameter.

In an implementation, the transmission channel corresponds to a transceiver antenna combination, and the transceiver antenna combination includes one transmit antenna in the wireless charging apparatus and one receive antenna in the to-be-charged device.

In an implementation, the processor 1802 is further configured to: before obtaining the channel information of the transmission channel and the waveform parameter used to indicate a waveform of an electromagnetic wave signal, receive, by using the transceiver antenna 1801, charging request information sent by the to-be-charged device through the transmission channel.

Based on the same technical concept, this application further provides a to-be-charged device 1900. FIG. 19 is a schematic diagram of a structure of the to-be-charged device 1900 according to an embodiment of this application. The to-be-charged device 1900 may be the to-be-charged device in the wireless charging system shown in FIG. 1, and may implement functions of the to-be-charged device in the wireless charging methods shown in FIG. 4, FIG. 13, FIG. 15, and FIG. 17. Referring to FIG. 19, the to-be-charged device 1900 includes a transceiver antenna 1901 and a processor 1902. Further, optionally, the to-be-charged device 1900 may include a memory 1903. The transceiver antenna 1901, the processor 1902, and the memory 1903 are connected to each other. It should be noted that the to-be-charged device 1900 may include at least one processor 1902 and at least one memory 1903. An example in which the to-be-charged device 1900 includes one processor 1902 and one memory 1903 is shown in FIG. 19.

The transceiver antenna 1901 is configured to receive and send a signal to communicate and interact with another device. For example, the transceiver antenna 1901 may be a transceiver antenna array including at least one transceiver antenna.

The memory 1903 is configured to store instructions, and the processor 1902 is configured to execute the instructions stored in the memory 1903. The memory 1903 stores program code, and the processor 1902 may invoke the program code stored in the memory 1903 to perform the wireless charging method provided in the embodiments of this application.

The processor 1902 is configured to: receive, through a transmission channel by using a transceiver antenna 1901, a target electromagnetic wave signal sent by a wireless charging apparatus, where the target electromagnetic wave signal is generated by the wireless charging apparatus based on obtained channel information of the transmission channel and an obtained waveform parameter used to indicate a waveform of an electromagnetic wave signal; and convert the target electromagnetic wave signal into a direct current signal, and perform charging based on the direct current signal.

In an implementation, the processor 1902 is further configured to: receive, by using the transceiver antenna 1901, at least one first test signal sent by the wireless charging apparatus through the transmission channel, where the at least one first test signal is in a one-to-one correspondence with at least one candidate waveform parameter, and any first test signal is generated based on a corresponding candidate waveform parameter; measure signal quality of the at least one first test signal; generate a first measurement result based on the signal quality of the at least one first test signal; and send the first measurement result to the wireless charging apparatus through the transmission channel by using the transceiver antenna 1901, so that the wireless charging apparatus selects the waveform parameter from the at least one candidate waveform parameter based on the first measurement result.

In an implementation, the first measurement result includes the signal quality of the at least one first test signal; or the first measurement result includes first indication information, and the first indication information is used to indicate a first target test signal with highest signal quality in the at least one first test signal.

In an implementation, the processor 1902 is further configured to: receive, by using the transceiver antenna 1901, a beacon signal sent by the wireless charging apparatus through the transmission channel; perform channel measurement based on the beacon signal to obtain the channel information; and send the channel information to the wireless charging apparatus through the transmission channel by using the transceiver antenna 1901.

In an implementation, the processor 1902 is further configured to send a beacon signal to the wireless charging apparatus by using the transceiver antenna 1901, where the beacon signal is used by the wireless charging apparatus to perform channel measurement.

In an implementation, the processor 1902 is further configured to: receive, by using the transceiver antenna 1901, at least one second test signal sent by the wireless charging apparatus, where the at least one second test signal is in a one-to-one correspondence with at least one piece of candidate channel information, and any second test signal is generated based on corresponding candidate channel information; measure signal quality of each of the at least one second test signal; generate a second measurement result based on the signal quality of the at least one second test signal; and send the second measurement result to the wireless charging apparatus by using the transceiver antenna 1901, so that the wireless charging apparatus selects the channel information from the at least one piece of candidate channel information based on the second measurement result.

In an implementation, the second measurement result includes the signal quality of the at least one second test signal; or the second measurement result includes second indication information, and the second indication information is used to indicate a second target test signal with highest signal quality in the at least one second test signal.

In an implementation, the transmission channel corresponds to a transceiver antenna combination, and the transceiver antenna combination includes one transmit antenna in the wireless charging apparatus and one receive antenna in the to-be-charged device.

In an implementation, the processor 1902 is further configured to: determine that current power is greater than or equal to power required for sending charging request information; and send the charging request information to the wireless charging apparatus through the transmission channel by using the transceiver antenna 1901.

It can be understood that the memories in FIG. 18 and FIG. 19 in this application each may be a volatile memory or a nonvolatile memory, or each may include both the volatile memory and the nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these and any memory of another proper type.

In the wireless charging system provided in the embodiments of this application, the wireless charging apparatus can determine, in a charging period, the channel information that includes the signal attenuation and the transmission delay that are of the electromagnetic wave signal transmitted through the transmission channel, and the waveform parameter used to indicate a waveform of an electromagnetic wave signal; and can further determine the target electromagnetic wave signal based on the channel information and the waveform parameter, so that the determined target electromagnetic wave signal can adapt to channel transmission, thereby improving power conversion efficiency of wireless charging. Compared with a conventional technology, the method does not rely on known channel information and structure information of a hardware design of a to-be-charged device, and it is only required to determine the channel information and the waveform parameter in a charging period in real time, thereby improving practicability of the wireless charging method.

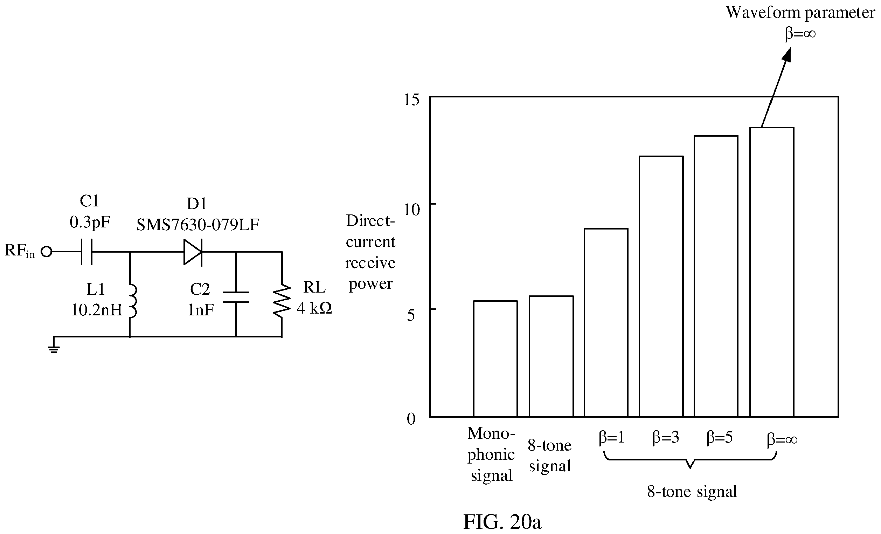

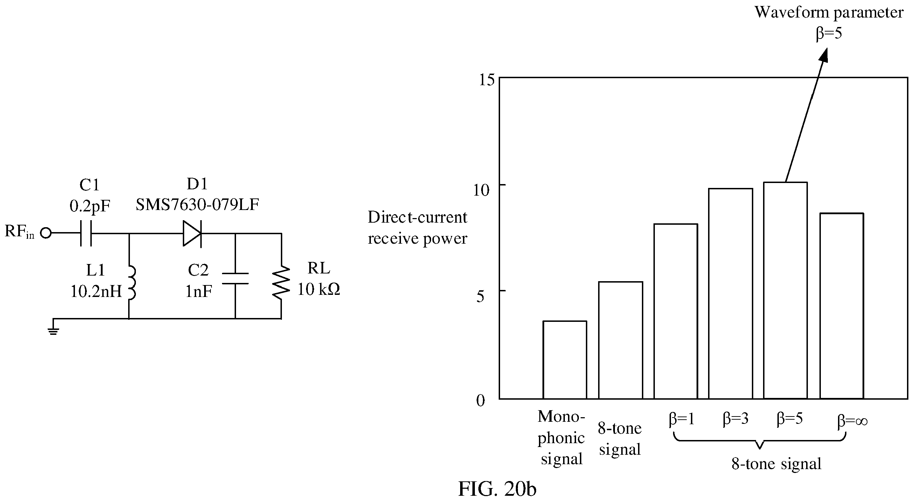

For example, the wireless charging method provided in the embodiments of this application is used to charge to-be-charged devices having different rectifier structures. FIG. 20a is a schematic diagram of a structure of a first to-be-charged device and a diagram of direct-current receive power corresponding to different specified waveform parameters when the to-be-charged device is wirelessly charged. It can be learned from FIG. 20a that, it is determined that a waveform parameter corresponding to the first to-be-charged device is $\beta = \infty$, and direct-current receive power of a target electromagnetic wave signal determined by using the waveform parameter can be increased by more than 200%. FIG. 20b is a schematic diagram of a second to-be-charged device and a diagram of direct-current receive power corresponding to different candidate waveform parameters when the to-be-charged device is wirelessly charged. It can be learned from FIG. 20b that, it is determined that a waveform parameter corresponding to the second to-be-charged device is β = 5, and direct-current receive power of a target electromagnetic wave signal determined by using the waveform parameter can also be increased by more than 200%. It can be learned from the foregoing effects that the wireless charging method provided in the embodiments of this application is applicable to determining of corresponding target electromagnetic wave signals for various to-be-charged devices, and wireless charging on the to-be-charged devices. An optimal waveform of a target electromagnetic wave signal used when a to-be-charged device is wirelessly charged can be determined without learning a hardware design structure of the to-be-charged device in advance, thereby effectively improving power conversion efficiency of wireless charging.

The invention is only defined by the appended set of claims.

**Claims**

1. A wireless charging system, wherein the wireless charging system comprises a wireless charging apparatus (1800) and a to-be-charged device (1900);

    the wireless charging apparatus (1800) is configured to:

    obtain (S405), in a charging period, channel information of a transmission channel and a waveform parameter used to indicate a waveform of an electromagnetic wave signal, wherein the transmission channel is a channel between the wireless charging apparatus (1800) and the to-be-charged device (1900) at a first frequency, and the channel information comprises signal attenuation and a transmission delay that are of an electromagnetic wave signal transmitted through the transmission channel; and
    generate (S405) a target electromagnetic wave signal based on the channel information and the waveform parameter, and send the target electromagnetic wave signal to the to-be-charged device (1900) through the transmission channel; and

    the to-be-charged device (1900) is configured to:

    receive (S406), through the transmission channel, the target electromagnetic wave signal sent by the wireless charging apparatus (1800); and
    convert (S407) the target electromagnetic wave signal into a direct current signal, and perform charging based on the direct current signal;
    **characterized in that** the waveform parameter is an exponential factor for an exponential operation performed on the signal attenuation in the channel information in a process of generating the target electromagnetic wave signal;
    wherein the target electromagnetic wave signal meets the following formula:

    $$w_n = e^{j\overline{\varphi_n}} A_n^{\beta} \sqrt{\frac{2P}{\sum_{n=1}^{N} A_n^{2\beta}}}$$

    where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus (1800), and β is the waveform parameter.

2. The wireless charging system according to claim 1, wherein when obtaining the waveform parameter used to indicate a waveform of an electromagnetic wave signal, the wireless charging apparatus (1800) is specifically configured to: select the waveform parameter from at least one preset candidate waveform parameter.

3. The wireless charging system according to claim 2, wherein when selecting the waveform parameter from the at least one preset candidate waveform parameter, the wireless charging apparatus (1800) is specifically configured to:

    send (S701) at least one first test signal to the to-be-charged device (1900) through the transmission channel, wherein the at least one first test signal is in a one-to-one correspondence with the at least one candidate waveform parameter, and any first test signal is generated based on a corresponding candidate waveform parameter;

receive (S703), through the transmission channel, a first measurement result sent by the to-be-charged device (1900), wherein the first measurement result is obtained by measuring signal quality of the at least one first test signal by the to-be-charged device (1900); and

select (S704) the waveform parameter from the at least one candidate waveform parameter based on the first measurement result; and

the to-be-charged device (1900) is further configured to:

> receive, through the transmission channel, the at least one first test signal sent by the wireless charging apparatus (1800);
>
> measure (S702) the signal quality of the at least one first test signal; and
>
> generate (S702) the first measurement result based on the signal quality of the at least one first test signal, and send (S703) the first measurement result to the wireless charging apparatus (1800) through the transmission channel.

**4.** The wireless charging system according to claim 3, wherein
the first measurement result comprises the signal quality of the at least one first test signal; and when selecting the waveform parameter from the at least one candidate waveform parameter based on the first measurement result, the wireless charging apparatus (1800) is specifically configured to:

> determine a first target test signal with highest signal quality based on the signal quality of the at least one first test signal comprised in the first measurement result; and determine, from the at least one candidate waveform parameter, a candidate waveform parameter corresponding to the first target test signal as the waveform parameter; or
>
> the first measurement result comprises first indication information, and the first indication information is used to indicate a first target test signal with highest signal quality in the at least one first test signal; and when selecting the waveform parameter from the at least one candidate waveform parameter based on the first measurement result, the wireless charging apparatus (1800) is specifically configured to:
>
> determine the first target test signal indicated by the first indication information; and determine, from the at least one candidate waveform parameter, a candidate waveform parameter corresponding to the first target test signal as the waveform parameter.

**5.** The wireless charging system according to any one of claims 1 to 4, wherein when obtaining the channel information of the transmission channel, the wireless charging apparatus (1800) is specifically configured to:

> perform a channel measurement process on the transmission channel to obtain the channel information; or
> select the channel information from at least one piece of preset candidate channel information.

**6.** The wireless charging system according to claim 5, wherein when performing the channel measurement process on the transmission channel to obtain the channel information, the wireless charging apparatus (1800) is specifically configured to:

> send (S801) a beacon signal to the to-be-charged device (1900) through the transmission channel, wherein the beacon signal is used by the to-be-charged device (1900) to perform channel measurement; and
>
> receive (S803), through the transmission channel, the channel information sent by the to-be-charged device (1900); and
>
> the to-be-charged device (1900) is further configured to:
>
> receive(S801), through the transmission channel, the beacon signal sent by the wireless charging apparatus (1800); and perform (S802) channel measurement based on the beacon signal to obtain the channel information; and
>
> send (S803) the channel information to the wireless charging apparatus (1800) through the transmission channel.

**7.** The wireless charging system according to claim 5, wherein the to-be-charged device (1900) is further configured to:

> send (S901) a beacon signal to the wireless charging apparatus (1800) through the transmission channel, wherein the beacon signal is used by the wireless charging apparatus (1800) to perform channel measurement; and

when performing (S902) the channel measurement process on the transmission channel to obtain the channel information, the wireless charging apparatus (1800) is specifically configured to:

receive (S901), through the transmission channel, the beacon signal sent by the to-be-charged device (1900); and perform channel measurement based on the beacon signal to obtain the channel information.

8. The wireless charging system according to claim 5, wherein when selecting the channel information from the at least one piece of preset candidate channel information, the wireless charging apparatus (1800) is specifically configured to:

send (S1001) at least one second test signal to the to-be-charged device (1900) through the transmission channel, wherein the at least one second test signal is in a one-to-one correspondence with the at least one piece of candidate channel information, and any second test signal is generated based on corresponding candidate channel information;

receive (S1003), through the transmission channel, a second measurement result sent by the to-be-charged device (1900), wherein the second measurement result is obtained by measuring signal quality of the at least one second test signal by the to-be-charged device (1900); and

select the channel information from the at least one piece of candidate channel information based on the second measurement result; and

the to-be-charged device (1900) is further configured to:

receive (S1001), through the transmission channel, the at least one second test signal sent by the wireless charging apparatus (1800);

measure (S1002) signal quality of each of the at least one second test signal; and

generate (S1002) the second measurement result based on the signal quality of the at least one second test signal, and send (S1003) the second measurement result to the wireless charging apparatus (1800) through the transmission channel.

9. The wireless charging system according to claim 8, wherein
the second measurement result comprises the signal quality of the at least one second test signal; and when selecting the channel information from the at least one piece of candidate channel information based on the second measurement result, the wireless charging apparatus (1800) is specifically configured to:

determine a second target test signal with highest signal quality based on the signal quality of the at least one second test signal comprised in the second measurement result; and determine, from the at least one piece of candidate channel information, candidate channel information corresponding to the second target test signal as the channel information; or

the second measurement result comprises second indication information, and the second indication information is used to indicate a second target test signal with highest signal quality in the at least one second test signal; and when selecting the channel information from the at least one piece of candidate channel information based on the second measurement result, the wireless charging apparatus (1800) is specifically configured to:

determine the second target test signal indicated by the second indication information; and determine, from the at least one piece of candidate channel information, candidate channel information corresponding to the second target test signal as the channel information.

10. A wireless charging apparatus (1800), comprising a signal processing module, a power signal generation module, and at least one transceiver antenna, wherein

the signal processing module is configured to obtain, in a charging period, channel information of a transmission channel and a waveform parameter used to indicate a waveform of an electromagnetic wave signal, wherein the transmission channel is a channel between the wireless charging apparatus (1800) and a to-be-charged device (1900) at a first frequency, and the channel information comprises signal attenuation and a transmission delay that are of an electromagnetic wave signal transmitted through the transmission channel;

the power signal generation module is configured to generate a target electromagnetic wave signal based on the channel information and the waveform parameter; and

the at least one transceiver antenna is configured to send the target electromagnetic wave signal to the to-be-charged device (1900) through the transmission channel;

**characterized in that** the waveform parameter is an exponential factor for an exponential operation performed on the signal attenuation in the channel information in a process of generating the target electromagnetic wave signal;
wherein the target electromagnetic wave signal meets the following formula:

$$w_n = e^{j\overline{\varphi_n}} A_n^{\beta} \sqrt{\frac{2P}{\sum_{n=1}^{N} A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus (1800), and $\beta$ is the waveform parameter.

11. The wireless charging apparatus (1800) according to claim 10, wherein when obtaining the waveform parameter used to indicate a waveform of an electromagnetic wave signal, the signal processing module is specifically configured to:
select the waveform parameter from at least one preset candidate waveform parameter.

12. The wireless charging apparatus (1800) according to claim 11, wherein the at least one transceiver antenna is further configured to:

send at least one first test signal to the to-be-charged device (1900) through the transmission channel, wherein the at least one first test signal is in a one-to-one correspondence with the at least one candidate waveform parameter, and any first test signal is generated based on a corresponding candidate waveform parameter; and
receive, through the transmission channel, a first measurement result sent by the to-be-charged device (1900), wherein the first measurement result is obtained by measuring signal quality of the at least one first test signal by the to-be-charged device (1900); and
when selecting the waveform parameter from the at least one preset candidate waveform parameter, the signal processing module is specifically configured to:
select the waveform parameter from the at least one candidate waveform parameter based on the first measurement result.

13. The wireless charging apparatus (1800) according to claim 12, wherein
the first measurement result comprises the signal quality of the at least one first test signal; and when selecting the waveform parameter from the at least one candidate waveform parameter based on the first measurement result, the signal processing module is specifically configured to:

determine a first target test signal with highest signal quality based on the signal quality of the at least one first test signal comprised in the first measurement result; and determine, from the at least one candidate waveform parameter, a candidate waveform parameter corresponding to the first target test signal as the waveform parameter; or
the first measurement result comprises first indication information, and the first indication information is used to indicate a first target test signal with highest signal quality in the at least one first test signal; and when selecting the waveform parameter from the at least one candidate waveform parameter based on the first measurement result, the signal processing module is specifically configured to:
determine the first target test signal indicated by the first indication information; and determine, from the at least one candidate waveform parameter, a candidate waveform parameter corresponding to the first target test signal as the waveform parameter.

14. A to-be-charged device (1900), comprising at least one transceiver antenna and a power receiving module, wherein

the at least one transceiver antenna is configured to receive, through a transmission channel, a target electromagnetic wave signal sent by a wireless charging apparatus (1800), wherein the target electromagnetic wave signal is generated by the wireless charging apparatus (1800) based on obtained channel information of the transmission channel and an obtained waveform parameter used to indicate a waveform of an electromagnetic wave signal; and

the power receiving module is configured to: convert the target electromagnetic wave signal into a direct current signal, and perform charging based on the direct current signal;

**characterized in that** the waveform parameter is an exponential factor for an exponential operation performed on the signal attenuation in the channel information in a process of generating the target electromagnetic wave signal;

wherein the target electromagnetic wave signal meets the following formula:

$$w_n = e^{j\overline{\varphi_n}} A_n^\beta \sqrt{\frac{2P}{\sum_{n=1}^N A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus (1800), and $\beta$ is the waveform parameter.

15. The to-be-charged device (1900) according to claim 14, wherein the at least one transceiver antenna is further configured to:

receive, through the transmission channel, at least one first test signal sent by the wireless charging apparatus (1800), wherein the at least one first test signal is in a one-to-one correspondence with at least one candidate waveform parameter, and any first test signal is generated based on a corresponding candidate waveform parameter; and

send a first measurement result to the wireless charging apparatus (1800) through the transmission channel, so that the wireless charging apparatus (1800) selects the waveform parameter from the at least one candidate waveform parameter based on the first measurement result;

the power receiving module is further configured to measure signal quality of the at least one first test signal; and the to-be-charged device (1900) further comprises a signal processing module, and the signal processing module is configured to generate the first measurement result based on the signal quality of the at least one first test signal.

16. The to-be-charged device (1900) according to claim 15, wherein

the first measurement result comprises the signal quality of the at least one first test signal; or the first measurement result comprises first indication information, and the first indication information is used to indicate a first target test signal with highest signal quality in the at least one first test signal.

17. A wireless charging method, applied to a wireless charging apparatus (1800), wherein the method comprises:

obtaining, in a charging period, channel information of a transmission channel and a waveform parameter used to indicate a waveform of an electromagnetic wave signal, wherein the transmission channel is a channel between the wireless charging apparatus (1800) and a to-be-charged device (1900) at a first frequency, and the channel information comprises signal attenuation and a transmission delay that are of an electromagnetic wave signal transmitted through the transmission channel; and

generating a target electromagnetic wave signal based on the channel information and the waveform parameter, and send the target electromagnetic wave signal to the to-be-charged device (1900) through the transmission channel, so that the to-be-charged device (1900) converts the target electromagnetic wave signal into a direct current signal, and performs charging based on the direct current signal;

**characterized in that** the waveform parameter is an exponential factor for an exponential operation performed on the signal attenuation in the channel information in a process of generating the target electromagnetic wave signal;

wherein the target electromagnetic wave signal meets the following formula:

$$w_n = e^{j\overline{\varphi_n}} A_n^\beta \sqrt{\frac{2P}{\sum_{n=1}^N A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus (1800), and $\beta$ is the waveform parameter.

18. A wireless charging method, applied to a to-be-charged device (1900), wherein the method comprises:

receiving, in a charging period through a transmission channel, a target electromagnetic wave signal sent by a wireless charging apparatus (1800), wherein the target electromagnetic wave signal is generated by the wireless charging apparatus (1800) based on obtained channel information of the transmission channel and an obtained waveform parameter used to indicate a waveform of an electromagnetic wave signal; and
converting the target electromagnetic wave signal into a direct current signal, and performing charging based on the direct current signal;
**characterized in that** the waveform parameter is an exponential factor for an exponential operation performed on the signal attenuation in the channel information in a process of generating the target electromagnetic wave signal;
wherein the target electromagnetic wave signal meets the following formula:

$$w_n = e^{j\overline{\varphi_n}} A_n^{\beta} \sqrt{\frac{2P}{\sum_{n=1}^{N} A_n^{2\beta}}}$$

where n represents the first frequency, $w_n$ represents the target electromagnetic wave signal, $\varphi_n$ represents the transmission delay included in the channel information, $A_n$ represents the signal attenuation included in the channel information, P is total transmit power of the wireless charging apparatus (1800), and $\beta$ is the waveform parameter.

**Patentansprüche**

1. Drahtloses Ladesystem, wobei das drahtlose Ladesystem ein drahtloses Ladegerät (1800) und eine zu ladende Vorrichtung (1900) umfasst;
wobei das drahtlose Ladegerät (1800) konfiguriert ist zum:

Erhalten (S405), in einem Ladezeitraum, von Kanalinformationen eines Übertragungskanals und eines Wellenformparameters, der verwendet wird, um eine Wellenform eines elektromagnetischen Wellensignals anzugeben, wobei der Übertragungskanal ein Kanal zwischen dem drahtlosen Ladegerät (1800) und der zu ladenden Vorrichtung (1900) mit einer ersten Frequenz ist, und die Kanalinformationen eine Signaldämpfung und eine Übertragungsverzögerung umfassen, die von einem elektromagnetischen Wellensignal sind, das über den Übertragungskanal übertragen wird; und
Erzeugen (S405) eines elektromagnetischen Zielwellensignals basierend auf den Kanalinformationen und dem Wellenformparameter und Senden des elektromagnetischen Zielwellensignals an die zu ladende Vorrichtung (1900) über den Übertragungskanal; und
die zu ladende Vorrichtung (1900) konfiguriert ist zum:

Empfangen (S406), über den Übertragungskanal, des elektromagnetischen Zielwellensignals, das von dem drahtlosen Ladegerät (1800) gesendet wird; und Umwandeln (S407) des elektromagnetischen Zielwellensignals in ein Gleichstromsignal und Durchführen des Ladens basierend auf dem Gleichstromsignal; **dadurch gekennzeichnet, dass** der Wellenformparameter ein exponentieller Faktor für eine exponentielle Operation ist, die an der Signaldämpfung in den Kanalinformationen in einem Prozess zum Erzeugen des elektromagnetischen Zielwellensignals durchgeführt wird;
wobei das elektromagnetische Zielwellensignal die folgende Formel erfüllt:

$$w_n = e^{j\overline{\varphi_n}} A_n^{\beta} \sqrt{\frac{2P}{\sum_{n=1}^{N} A_n^{2\beta}}}$$

wobei n für die erste Frequenz steht, $w_n$ für das elektromagnetische Zielwellensignal steht, $\varphi_n$ für die Übertragungsverzögerung steht, die in den Kanalinformationen eingeschlossen ist, $A_n$ für die Signaldämpfung steht, die in den Kanalinformationen eingeschlossen ist, P die Gesamtübertragungsleistung des drahtlosen Ladegeräts (1800) ist und $\beta$ der Wellenformparameter ist.

2.  Drahtloses Ladesystem nach Anspruch 1, wobei beim Erhalten des Wellenformparameters, der verwendet wird, um eine Wellenform eines elektromagnetischen Wellensignals anzugeben, das drahtlose Ladegerät (1800) spezifisch konfiguriert ist zum:
    Auswählen des Wellenformparameters aus mindestens einem voreingestellten Kandidatenwellenformparameter.

3.  Drahtloses Ladesystem nach Anspruch 2, wobei beim Auswählen des Wellenformparameters aus dem mindestens einen voreingestellten Kandidatenwellenformparameter das drahtlose Ladegerät (1800) spezifisch konfiguriert ist zum:

    Senden (S701) mindestens eines ersten Testsignals an die zu ladende Vorrichtung (1900) über den Übertragungskanal, wobei sich das mindestens eine erste Testsignal in einer Eins-zu-Eins-Entsprechung mit dem mindestens einen Kandidatenwellenformparameter befindet und ein beliebiges erstes Testsignal basierend auf einem entsprechenden Kandidatenwellenformparameter erzeugt wird;
    Empfangen (S703), über den Übertragungskanal, eines ersten Messergebnisses, das von der zu ladenden Vorrichtung (1900) gesendet wird, wobei das erste Messergebnis durch Messen der Signalqualität des mindestens einen ersten Testsignals durch die zu ladende Vorrichtung (1900) erhalten wird; und Auswählen (S704) des Wellenformparameters aus dem mindestens einen Kandidatenwellenformparameter basierend auf dem ersten Messergebnis; und
    wobei die zu ladende Vorrichtung (1900) ferner konfiguriert ist zum:

    Empfangen, über den Übertragungskanal, des mindestens einen ersten Testsignals, das von dem drahtlosen Ladegerät (1800) gesendet wird;
    Messen (S702) der Signalqualität des mindestens einen ersten Testsignals; und
    Erzeugen (S702) des ersten Messergebnisses basierend auf der Signalqualität des mindestens einen ersten Testsignals und Senden (S703) des ersten Messergebnisses an das drahtlose Ladegerät (1800) über den Übertragungskanal.

4.  Drahtloses Ladesystem nach Anspruch 3, wobei
    das erste Messergebnis die Signalqualität des mindestens einen ersten Testsignals umfasst; und beim Auswählen des Wellenformparameters aus dem mindestens einen Kandidatenwellenformparameter basierend auf dem ersten Messergebnis das drahtlose Ladegerät (1800) spezifisch konfiguriert ist zum:

    Bestimmen eines ersten Zieltestsignals mit höchster Signalqualität basierend auf der Signalqualität des mindestens einen ersten Testsignals, das in dem ersten Messergebnis enthalten ist; und Bestimmen, anhand des mindestens einen Kandidatenwellenformparameters, eines Kandidatenwellenformparameters, der dem ersten Zieltestsignal entspricht, als den Wellenformparameter;
    oder
    das erste Messergebnis erste Angabeinformationen umfasst und die ersten Angabeinformationen verwendet werden, um ein erstes Zieltestsignal mit höchster Signalqualität in dem mindestens einen ersten Testsignal anzugeben; und beim Auswählen des Wellenformparameters aus dem mindestens einen Kandidatenwellenformparameter basierend auf dem ersten Messergebnis das drahtlose Ladegerät (1800) spezifisch konfiguriert ist zum:
    Bestimmen des ersten Zieltestsignals, das durch die ersten Angabeinformationen angegeben wird; und Bestimmen, anhand des mindestens einen Kandidatenwellenformparameters, eines Kandidatenwellenformparameters, der dem ersten Zieltestsignal entspricht, als den Wellenformparameter.

5.  Drahtloses Ladesystem nach einem der Ansprüche 1 bis 4, wobei beim Erhalten der Kanalinformationen des Übertragungskanals das drahtlose Ladegerät (1800) spezifisch konfiguriert ist zum:

    Durchführen eines Kanalmessprozesses auf dem Übertragungskanal, um die Kanalinformationen zu erhalten;
    oder
    Auswählen der Kanalinformationen aus mindestens einem Stück voreingestellter Kandidatenkanalinformationen.

**6.** Drahtloses Ladesystem nach Anspruch 5, wobei beim Durchführen des Kanalmessprozesses auf dem Übertragungskanal, um die Kanalinformationen zu erhalten, das drahtlose Ladegerät (1800) spezifisch konfiguriert ist zum:

Senden (S801) eines Bakensignals an die zu ladende Vorrichtung (1900) über den Übertragungskanal, wobei das Bakensignal von der zu ladenden Vorrichtung (1900) verwendet wird, um eine Kanalmessung durchzuführen; und
Empfangen (S803), über den Übertragungskanal, der Kanalinformationen, die von der zu ladenden Vorrichtung (1900) gesendet werden; und
wobei die zu ladende Vorrichtung (1900) ferner konfiguriert ist zum:

Empfangen (S801), über den Übertragungskanal, des Bakensignals, das von dem drahtlosen Ladegerät (1800) gesendet wird; und Durchführen (S802) der Kanalmessung basierend auf dem Bakensignal, um die Kanalinformationen zu erhalten; und
Senden (S803) der Kanalinformationen an das drahtlose Ladegerät (1800) über den Übertragungskanal.

**7.** Drahtloses Ladesystem nach Anspruch 5, wobei die zu ladende Vorrichtung (1900) ferner konfiguriert ist zum:

Senden (S901) eines Bakensignals an das drahtlose Ladegerät (1800) über den Übertragungskanal, wobei das Bakensignal von dem drahtlosen Ladegerät (1800) verwendet wird, um eine Kanalmessung durchzuführen; und
beim Durchführen (S902) des Kanalmessprozesses auf dem Übertragungskanal, um die Kanalinformationen zu erhalten, das drahtlose Ladegerät (1800) spezifisch konfiguriert ist zum:
Empfangen (S901), über den Übertragungskanal, des Bakensignals, das von der zu ladenden Vorrichtung (1900) gesendet wird; und Durchführen einer Kanalmessung basierend auf dem Bakensignal, um die Kanalinformationen zu erhalten.

**8.** Drahtloses Ladesystem nach Anspruch 5, wobei beim Auswählen der Kanalinformationen aus dem mindestens einen Stück voreingestellter Kandidatenkanalinformationen das drahtlose Ladegerät (1800) spezifisch konfiguriert ist zum:

Senden (S1001) mindestens eines zweiten Testsignals an die zu ladende Vorrichtung (1900) über den Übertragungskanal, wobei sich das mindestens eine zweite Testsignal in einer Eins-zu-Eins-Entsprechung mit dem mindestens einen Teil von Kandidatenkanalinformationen befindet und ein beliebiges zweites Testsignal basierend auf entsprechenden Kandidatenkanalinformationen erzeugt wird;
Empfangen (S1003), über den Übertragungskanal, eines zweiten Messergebnisses, das von der zu ladenden Vorrichtung (1900) gesendet wird, wobei das zweite Messergebnis durch Messen der Signalqualität des mindestens einen zweiten Testsignals durch die zu ladende Vorrichtung (1900) erhalten wird; und Auswählen der Kanalinformationen aus dem mindestens einen Teil von Kandidatenkanalinformationen basierend auf dem zweiten Messergebnis; und
wobei die zu ladende Vorrichtung (1900) ferner konfiguriert ist zum:

Empfangen (S1001), über den Übertragungskanal, des mindestens einen zweiten Testsignals, das von dem drahtlosen Ladegerät (1800) gesendet wird;
Messen (S1002) einer Signalqualität jedes des mindestens einen zweiten Testsignals; und Erzeugen (S1002) des zweiten Messergebnisses basierend auf der Signalqualität des mindestens einen zweiten Testsignals und Senden (S1003) des zweiten Messergebnisses an das drahtlose Ladegerät (1800) über den Übertragungskanal.

**9.** Drahtloses Ladesystem nach Anspruch 8, wobei
das zweite Messergebnis die Signalqualität des mindestens einen zweiten Testsignals umfasst; und beim Auswählen der Kanalinformationen aus dem mindestens einen Stück von Kandidatenkanalinformationen basierend auf dem zweiten Messergebnis das drahtlose Ladegerät (1800) spezifisch konfiguriert ist zum:

Bestimmen eines zweiten Zieltestsignals mit höchster Signalqualität basierend auf der Signalqualität des mindestens einen zweiten Testsignals, das in dem zweiten Messergebnis enthalten ist; und Bestimmen, anhand des mindestens einen Teils von Kandidatenkanalinformationen, von Kandidatenkanalinformationen, die dem zweiten Zieltestsignal entsprechen, als die Kanalinformationen; oder
das zweite Messergebnis zweite Angabeinformationen umfasst und die zweiten Angabeinformationen verwendet werden, um ein zweites Zieltestsignal mit höchster Signalqualität in dem mindestens einen zweiten Testsignal anzugeben; und beim Auswählen der Kanalinformationen aus dem mindestens einen Stück von Kandidatenkanalinformationen basierend auf dem zweiten Messergebnis das drahtlose Ladegerät (1800) spezifisch konfiguriert ist zum:

Bestimmen des zweiten Zieltestsignals, das durch die zweiten Angabeinformationen angegeben wird; und Bestimmen, anhand des mindestens einen Teils von Kandidatenkanalinformationen, von Kandidatenkanalinformationen, die dem zweiten Zieltestsignal entsprechen, als die Kanalinformationen.

10. Drahtloses Ladegerät (1800), das ein Signalverarbeitungsmodul, ein

Leistungssignalerzeugungsmodul und mindestens eine Transceiverantenne umfasst, wobei
das Signalverarbeitungsmodul konfiguriert ist, um, in einem Ladezeitraum, Kanalinformationen eines Übertragungskanals und einen Wellenformparameter zu erhalten, der verwendet wird, um eine Wellenform eines elektromagnetischen Wellensignals anzugeben, wobei der Übertragungskanal ein Kanal zwischen dem drahtlosen Ladegerät (1800) und einer zu ladenden Vorrichtung (1900) mit einer ersten Frequenz ist, und die Kanalinformationen eine Signaldämpfung und eine Übertragungsverzögerung umfassen, die von einem elektromagnetischen Wellensignal sind, das über den Übertragungskanal übertragen wird;
das Leistungssignalerzeugungsmodul konfiguriert ist, um ein elektromagnetisches Zielwellensignal basierend auf den Kanalinformationen und dem Wellenformparameter zu erzeugen; und
die mindestens eine Transceiverantenne konfiguriert ist, um das elektromagnetische Zielwellensignal über den Übertragungskanal an die zu ladende Vorrichtung (1900) zu senden;
**dadurch gekennzeichnet, dass** der Wellenformparameter ein exponentieller Faktor für eine exponentielle Operation ist, die an der Signaldämpfung in den Kanalinformationen in einem Prozess zum Erzeugen des elektromagnetischen Zielwellensignals durchgeführt wird;
wobei das elektromagnetische Zielwellensignal die folgende Formel erfüllt:

$$w_n = e^{j\overline{\varphi_n}} A_n^{\beta} \sqrt{\frac{2P}{\sum_{n=1}^{N} A_n^{2\beta}}}$$

wobei n für die erste Frequenz steht, $w_n$ für das elektromagnetische Zielwellensignal steht, $\varphi_n$ für die Übertragungsverzögerung steht, die in den Kanalinformationen eingeschlossen ist, $A_n$ für die Signaldämpfung steht, die in den Kanalinformationen eingeschlossen ist, P die Gesamtübertragungsleistung des drahtlosen Ladegeräts (1800) ist und $\beta$ der Wellenformparameter ist.

11. Drahtloses Ladegerät (1800) nach Anspruch 10, wobei beim Erhalten des Wellenformparameters, der verwendet wird, um eine Wellenform eines elektromagnetischen Wellensignals anzugeben, das Signalverarbeitungsmodul spezifisch konfiguriert ist zum:
Auswählen des Wellenformparameters aus mindestens einem voreingestellten Kandidatenwellenformparameter.

12. Drahtloses Ladegerät (1800) nach Anspruch 11, wobei die mindestens eine Transceiverantenne ferner konfiguriert ist zum:

Senden mindestens eines ersten Testsignals an die zu ladende Vorrichtung (1900) über den Übertragungskanal, wobei sich das mindestens eine erste Testsignal in einer Eins-zu-Eins-Entsprechung mit dem mindestens einen Kandidatenwellenformparameter befindet und ein beliebiges erstes Testsignal basierend auf einem entsprechenden Kandidatenwellenformparameter erzeugt wird; und
Empfangen, über den Übertragungskanal, eines ersten Messergebnisses, das von der zu ladenden Vorrichtung (1900) gesendet wird, wobei das erste Messergebnis durch Messen der Signalqualität des mindestens einen ersten Testsignals durch die zu ladende Vorrichtung (1900) erhalten wird; und
beim Auswählen der Wellenformparameter aus dem mindestens einen voreingestellten Kandidatenwellenformparameter das Signalverarbeitungsmodul spezifisch konfiguriert ist zum:
Auswählen des Wellenformparameters aus dem mindestens einen Kandidatenwellenformparameter basierend auf dem ersten Messergebnis.

13. Drahtloses Ladegerät (1800) nach Anspruch 12, wobei
das erste Messergebnis die Signalqualität des mindestens einen ersten Testsignals umfasst; und beim Auswählen des Wellenformparameters aus dem mindestens einen Kandidatenwellenformparameter basierend auf dem ersten Messergebnis das Signalverarbeitungsmodul spezifisch konfiguriert ist zum:

Bestimmen eines ersten Zieltestsignals mit höchster Signalqualität basierend auf der Signalqualität des mindestens einen ersten Testsignals, das in dem ersten Messergebnis enthalten ist; und Bestimmen, anhand des mindestens einen Kandidatenwellenformparameters, eines Kandidatenwellenformparameters, der dem ersten Zieltestsignal entspricht, als den Wellenformparameter;

oder

das erste Messergebnis erste Angabeinformationen umfasst und die ersten Angabeinformationen verwendet werden, um ein erstes Zieltestsignal mit höchster Signalqualität in dem mindestens einen ersten Testsignal anzugeben; und beim Auswählen des Wellenformparameters aus dem mindestens einen Kandidatenwellenformparameter basierend auf dem ersten Messergebnis das Signalverarbeitungsmodul spezifisch konfiguriert ist zum:

Bestimmen des ersten Zieltestsignals, das durch die ersten Anzeigeinformationen angegeben wird; und Bestimmen, anhand des mindestens einen Kandidatenwellenformparameters, eines Kandidatenwellenformparameters, der dem ersten Zieltestsignal entspricht, als den Wellenformparameter.

14. Zu ladende Vorrichtung (1900), die mindestens eine Transceiverantenne und ein Leistungsempfangsmodul umfasst, wobei

die mindestens eine Transceiverantenne konfiguriert ist, um über einen Übertragungskanal ein elektromagnetisches Zielwellensignal zu empfangen, das von einem drahtlosen Ladegerät (1800) gesendet wird, wobei das elektromagnetische Zielwellensignal von dem drahtlosen Ladegerät (1800) basierend auf erhaltenen Kanalinformationen des Übertragungskanals und einem erhaltenen Wellenformparameter erzeugt wird, der verwendet wird, um eine Wellenform eines elektromagnetischen Wellensignals anzugeben; und
das Leistungsempfangsmodul konfiguriert ist zum: Umwandeln des elektromagnetischen Zielwellensignals in ein Gleichstromsignal und Durchführen des Ladens basierend auf dem Gleichstromsignal;
**dadurch gekennzeichnet, dass** der Wellenformparameter ein exponentieller Faktor für eine exponentielle Operation ist, die an der Signaldämpfung in den Kanalinformationen in einem Prozess zum Erzeugen des elektromagnetischen Zielwellensignals durchgeführt wird;
wobei das elektromagnetische Zielwellensignal die folgende Formel erfüllt:

$$w_n = e^{i\overline{\varphi_n}} A_n^\beta \sqrt{\frac{2P}{\sum_{n=1}^N A_n^{2\beta}}}$$

wobei n für die erste Frequenz steht, $w_n$ für das elektromagnetische Zielwellensignal steht, $\varphi_n$ für die Übertragungsverzögerung steht, die in den Kanalinformationen eingeschlossen ist, $A_n$ für die Signaldämpfung steht, die in den Kanalinformationen eingeschlossen ist, P die Gesamtübertragungsleistung des drahtlosen Ladegeräts (1800) ist und $\beta$ der Wellenformparameter ist.

15. Zu ladende Vorrichtung (1900) nach Anspruch 14, wobei die mindestens eine Transceiverantenne ferner konfiguriert ist zum:

Empfangen, über den Übertragungskanal, mindestens eines ersten Testsignals, das von dem drahtlosen Ladegerät (1800) gesendet wird, wobei sich das mindestens eine erste Testsignal in einer Eins-zu-Eins-Entsprechung mit mindestens einem Kandidatenwellenformparameter befindet und ein erstes Testsignal basierend auf einem entsprechenden Kandidatenwellenformparameter erzeugt wird;
und
Senden eines ersten Messergebnisses an das drahtlose Ladegerät (1800) über den Übertragungskanal, sodass das drahtlose Ladegerät (1800) den Wellenformparameter aus dem mindestens einen Kandidatenwellenformparameter basierend auf dem ersten Messergebnis auswählt;
das Leistungsempfangsmodul ferner konfiguriert ist, um die Signalqualität des mindestens einen ersten Testsignals zu messen;
und
die zu ladende Vorrichtung (1900) ferner ein Signalverarbeitungsmodul umfasst und
das Signalverarbeitungsmodul konfiguriert ist, um das erste Messergebnis basierend auf der Signalqualität des mindestens einen ersten Testsignals zu erzeugen.

16. Zu ladende Vorrichtung (1900) nach Anspruch 15, wobei

das erste Messergebnis die Signalqualität des mindestens einen ersten Testsignals umfasst; oder
das erste Messergebnis erste Angabeinformationen umfasst und die ersten Angabeinformationen verwendet werden, um ein erstes Zieltestsignal mit höchster Signalqualität in dem mindestens einen ersten Testsignal anzugeben.

17. Drahtloses Ladeverfahren, das auf ein drahtloses Ladegerät (1800) angewendet wird, wobei das Verfahren Folgendes umfasst:

Erhalten, in einem Ladezeitraum, von Kanalinformationen eines Übertragungskanals und eines Wellenformparameters, der verwendet wird, um eine Wellenform eines elektromagnetischen Wellensignals anzugeben, wobei der Übertragungskanal ein Kanal zwischen dem drahtlosen Ladegerät (1800) und einer zu ladenden Vorrichtung (1900) mit einer ersten Frequenz ist, und die Kanalinformationen eine Signaldämpfung und eine Übertragungsverzögerung umfassen, die von einem elektromagnetischen Wellensignal sind, das über den Übertragungskanal übertragen wird; und
Erzeugen eines elektromagnetischen Zielwellensignals basierend auf den Kanalinformationen und dem Wellenformparameter und Senden des elektromagnetischen Zielwellensignals an die zu ladende Vorrichtung (1900) über den Übertragungskanal, sodass die zu ladende Vorrichtung (1900) das elektromagnetische Zielwellensignal in ein Gleichstromsignal umwandelt und das Laden basierend auf dem Gleichstromsignal durchführt;
**dadurch gekennzeichnet, dass** der Wellenformparameter ein exponentieller Faktor für eine exponentielle Operation ist, die an der Signaldämpfung in den Kanalinformationen in einem Prozess zum Erzeugen des elektromagnetischen Zielwellensignals durchgeführt wird;
wobei das elektromagnetische Zielwellensignal die folgende Formel erfüllt:

$$w_n = e^{j\overline{\varphi_n}} A_n^{\beta} \sqrt{\frac{2P}{\sum_{n=1}^{N} A_n^{2\beta}}}$$

wobei n für die erste Frequenz steht, $w_n$ für das elektromagnetische Zielwellensignal steht, $\varphi_n$ für die Übertragungsverzögerung steht, die in den Kanalinformationen eingeschlossen ist, $A_n$ für die Signaldämpfung steht, die in den Kanalinformationen eingeschlossen ist, P die Gesamtübertragungsleistung des drahtlosen Ladegeräts (1800) ist und $\beta$ der Wellenformparameter ist.

18. Drahtloses Ladeverfahren, das auf eine zu ladende Vorrichtung (1900) angewendet wird, wobei das Verfahren Folgendes umfasst:

Empfangen, in einem Ladezeitraum über einen Übertragungskanal, eines elektromagnetischen Zielwellensignals, das von einem drahtlosen Ladegerät (1800) gesendet wird, wobei das elektromagnetische Zielwellensignal von dem drahtlosen Ladegerät (1800) basierend auf erhaltenen Kanalinformationen des Übertragungskanals und einem erhaltenen Wellenformparameter erzeugt wird, der verwendet wird, um eine Wellenform eines elektromagnetischen Wellensignals anzugeben; und
Umwandeln des elektromagnetischen Zielwellensignals in ein Gleichstromsignal und Durchführen des Ladens basierend auf dem Gleichstromsignal;
**dadurch gekennzeichnet, dass** der Wellenformparameter ein exponentieller Faktor für eine exponentielle Operation ist, die an der Signaldämpfung in den Kanalinformationen in einem Prozess zum Erzeugen des elektromagnetischen Zielwellensignals durchgeführt wird;
wobei das elektromagnetische Zielwellensignal die folgende Formel erfüllt:

$$w_n = e^{j\overline{\varphi_n}} A_n^{\beta} \sqrt{\frac{2P}{\sum_{n=1}^{N} A_n^{2\beta}}}$$

wobei n für die erste Frequenz steht, $w_n$ für das elektromagnetische Zielwellensignal steht, $\varphi_n$ für die Übertra-

gungsverzögerung steht, die in den Kanalinformationen eingeschlossen ist, A_n für die Signaldämpfung steht, die in den Kanalinformationen eingeschlossen ist, P die Gesamtübertragungsleistung des drahtlosen Ladegeräts (1800) ist und β der Wellenformparameter ist.

**Revendications**

1. Système de charge sans fil, dans lequel le système de charge sans fil comprend un appareil de charge sans fil (1800) et un dispositif à charger (1900) ;
   l'appareil de charge sans fil (1800) est configuré pour :

   obtenir (S405), dans une période de charge, des informations de canal d'un canal de transmission et d'un paramètre de forme d'onde utilisé pour indiquer une forme d'onde d'un signal d'onde électromagnétique, dans lequel le canal de transmission est un canal entre l'appareil de charge sans fil (1800) et le dispositif à charger (1900) à une première fréquence, et les informations de canal comprennent une atténuation de signal et un retard de transmission qui sont d'un signal d'onde électromagnétique transmis à travers le canal de transmission ; et
   générer (S405) un signal d'onde électromagnétique cible sur la base des informations de canal et du paramètre de forme d'onde, et envoyer le signal d'onde électromagnétique cible au dispositif à charger (1900) à travers le canal de transmission ; et
   le dispositif à charger (1900) est configuré pour :

   recevoir (S406), à travers le canal de transmission, le signal d'onde électromagnétique cible envoyé par l'appareil de charge sans fil (1800) ; et convertir (S407) le signal d'onde électromagnétique cible en un signal de courant continu, et effectuer une charge sur la base du signal de courant continu ; **caractérisé en ce que** le paramètre de forme d'onde est un facteur exponentiel pour une opération exponentielle effectuée sur l'atténuation de signal dans les informations de canal dans un processus de génération du signal d'onde électromagnétique cible ; dans lequel le signal d'onde électromagnétique cible satisfait à la formule suivante :

$$w_n = e^{j\overline{\varphi_n}} A_n^{\beta} \sqrt{\frac{2P}{\sum_{n=1}^{N} A_n^{2\beta}}}$$

   où n représente la première fréquence, $w_n$ représente le signal d'onde électromagnétique cible, $\varphi_n$ représente le retard de transmission inclus dans les informations de canal, $A_n$ représente l'atténuation de signal incluse dans les informations de canal, P est la puissance de transmission totale de l'appareil de charge sans fil (1800), et β est le paramètre de forme d'onde.

2. Système de charge sans fil selon la revendication 1, dans lequel, lors de l'obtention du paramètre de forme d'onde utilisé pour indiquer une forme d'onde d'un signal d'onde électromagnétique, l'appareil de charge sans fil (1800) est spécifiquement configuré pour :
   sélectionner le paramètre de forme d'onde à partir d'au moins un paramètre de forme d'onde candidat prédéfini.

3. Système de charge sans fil selon la revendication 2, dans lequel, lors de la sélection du paramètre de forme d'onde à partir de l'au moins un paramètre de forme d'onde candidat prédéfini, l'appareil de charge sans fil (1800) est spécifiquement configuré pour :

   envoyer (S701) au moins un premier signal de test au dispositif à charger (1900) à travers le canal de transmission, dans lequel l'au moins un premier signal de test est en correspondance biunivoque avec l'au moins un paramètre de forme d'onde candidat, et tout premier signal de test est généré sur la base d'un paramètre de forme d'onde candidat correspondant ;
   recevoir (S703), à travers le canal de transmission, un premier résultat de mesure envoyé par le dispositif à charger (1900), dans lequel le premier résultat de mesure est obtenu en mesurant une qualité de signal de l'au moins un premier signal de test par le dispositif à charger (1900) ; et
   sélectionner (S704) le paramètre de forme d'onde à partir de l'au moins un paramètre de forme d'onde candidat sur la base du premier résultat de mesure ; et

le dispositif à charger (1900) est en outre configuré pour :

recevoir, à travers le canal de transmission, l'au moins un premier signal de test envoyé par l'appareil de charge sans fil (1800) ;
mesurer (S702) la qualité de signal de l'au moins un premier signal de test ; et
générer (S702) le premier résultat de mesure sur la base de la qualité de signal de l'au moins un premier signal de test, et envoyer (S703) le premier résultat de mesure à l'appareil de charge sans fil (1800) à travers le canal de transmission.

4. Système de charge sans fil selon la revendication 3, dans lequel le premier résultat de mesure comprend la qualité de signal de l'au moins un premier signal de test ; et lors de la sélection du paramètre de forme d'onde à partir de l'au moins un paramètre de forme d'onde candidat sur la base du premier résultat de mesure, l'appareil de charge sans fil (1800) est spécifiquement configuré pour :

déterminer un premier signal de test cible avec une qualité de signal la plus élevée sur la base de la qualité de signal de l'au moins un premier signal de test compris dans le premier résultat de mesure ; et déterminer, à partir de l'au moins un paramètre de forme d'onde candidat, un paramètre de forme d'onde candidat correspondant au premier signal de test cible en tant que paramètre de forme d'onde ;
ou
le premier résultat de mesure comprend des premières informations d'indication, et les premières informations d'indication sont utilisées pour indiquer un premier signal de test cible avec une qualité de signal la plus élevée dans l'au moins un premier signal de test ; et lors de la sélection du paramètre de forme d'onde à partir de l'au moins un paramètre de forme d'onde candidat sur la base du premier résultat de mesure, l'appareil de charge sans fil (1800) est spécifiquement configuré pour :
déterminer le premier signal de test cible indiqué par les premières informations d'indication ; et déterminer, à partir de l'au moins un paramètre de forme d'onde candidat, un paramètre de forme d'onde candidat correspondant au premier signal de test cible comme paramètre de forme d'onde.

5. Système de charge sans fil selon l'une quelconque des revendications 1 à 4, dans lequel, lors de l'obtention des informations de canal du canal de transmission, l'appareil de charge sans fil (1800) est spécifiquement configuré pour :

effectuer un processus de mesure de canal sur le canal de transmission pour obtenir les informations de canal ; ou
sélectionner les informations de canal à partir d'au moins un élément d'informations de canal candidat prédéfinies.

6. Système de charge sans fil selon la revendication 5, dans lequel, lors du fait d'effectuer le processus de mesure de canal sur le canal de transmission pour obtenir les informations de canal, l'appareil de charge sans fil (1800) est spécifiquement configuré pour :

envoyer (S801) un signal de balise au dispositif à charger (1900) à travers le canal de transmission, dans lequel le signal de balise est utilisé par le dispositif à charger (1900) pour effectuer une mesure de canal ; et
recevoir (S803), à travers le canal de transmission, les informations de canal envoyées par le dispositif à charger (1900) ; et
le dispositif à charger (1900) est en outre configuré pour :

recevoir (S801), à travers le canal de transmission, le signal de balise envoyé par l'appareil de charge sans fil (1800) ; et effectuer (S802) une mesure de canal sur la base du signal de balise pour obtenir les informations de canal ; et
envoyer (S803) les informations de canal à l'appareil de charge sans fil (1800) à travers le canal de transmission.

7. Système de charge sans fil selon la revendication 5, dans lequel le dispositif à charger (1900) est en outre configuré pour :

envoyer (S901) un signal de balise à l'appareil de charge sans fil (1800) à travers le canal de transmission, dans lequel le signal de balise est utilisé par l'appareil de charge sans fil (1800) pour effectuer une mesure de canal ; et

lors du fait d'effectuer (S902) le processus de mesure de canal sur le canal de transmission pour obtenir les informations de canal, l'appareil de charge sans fil (1800) est spécifiquement configuré pour :
recevoir (S901), à travers le canal de transmission, le signal de balise envoyé par le dispositif à charger (1900) ;
et effectuer une mesure de canal sur la base du signal de balise pour obtenir les informations de canal.

8. Système de charge sans fil selon la revendication 5, dans lequel, lors de la sélection des informations de canal à partir de l'au moins un élément d'informations de canal candidat prédéfinies, l'appareil de charge sans fil (1800) est spécifiquement configuré pour :

envoyer (S1001) au moins un second signal de test au dispositif à charger (1900) à travers le canal de transmission, dans lequel l'au moins un second signal de test est dans une correspondance biunivoque avec l'au moins un élément d'informations de canal candidat, et tout second signal de test est généré sur la base d'informations de canal candidat correspondantes ;
recevoir (S1003), à travers le canal de transmission, un second résultat de mesure envoyé par le dispositif à charger (1900), dans lequel le second résultat de mesure est obtenu en mesurant une qualité de signal de l'au moins un second signal de test par le dispositif à charger (1900) ; et
sélectionner les informations de canal à partir de l'au moins un élément d'informations de canal candidat sur la base du second résultat de mesure ; et
le dispositif à charger (1900) est en outre configuré pour :

recevoir (S1001), à travers le canal de transmission, l'au moins un second signal de test envoyé par l'appareil de charge sans fil (1800) ;
mesurer (S1002) une qualité de signal de chacun de l'au moins un second signal de test ; et
générer (S1002) le second résultat de mesure sur la base de la qualité de signal de l'au moins un second signal de test, et envoyer (S1003) le second résultat de mesure à l'appareil de charge sans fil (1800) à travers le canal de transmission.

9. Système de charge sans fil selon la revendication 8, dans lequel le second résultat de mesure comprend la qualité de signal de l'au moins un second signal de test ; et lors de la sélection des informations de canal à partir de l'au moins un élément d'informations de canal candidat sur la base du second résultat de mesure, l'appareil de charge sans fil (1800) est spécifiquement configuré pour :

déterminer un second signal de test cible avec une qualité de signal la plus élevée sur la base de la qualité de signal de l'au moins un second signal de test compris dans le second résultat de mesure ; et déterminer, à partir de l'au moins un élément d'informations de canal candidat, des informations de canal candidat correspondant au second signal de test cible en tant qu'informations de canal ; ou
le second résultat de mesure comprend des secondes informations d'indication, et
les secondes informations d'indication sont utilisées pour indiquer un second signal de test cible avec une qualité de signal la plus élevée dans l'au moins un second signal de test ; et lors de la sélection des informations de canal à partir de l'au moins un morceau d'informations de canal candidat sur la base du second résultat de mesure, l'appareil de charge sans fil (1800) est spécifiquement configuré pour :
déterminer le second signal de test cible indiqué par les secondes informations d'indication ; et déterminer, à partir de l'au moins un élément d'informations de canal candidat, des informations de canal candidat correspondant au second signal de test cible en tant qu'informations de canal.

10. Appareil de charge sans fil (1800), comprenant un module de traitement de signal,

un module de génération de signal de puissance et au moins une antenne d'émetteur-récepteur, dans lequel le module de traitement de signal est configuré pour obtenir, dans une période de charge, des informations de canal d'un canal de transmission et un paramètre de forme d'onde utilisé pour indiquer une forme d'onde d'un signal d'onde électromagnétique, dans lequel le canal de transmission est un canal entre l'appareil de charge sans fil (1800) et un dispositif à charger (1900) à une première fréquence, et les informations de canal comprennent une atténuation de signal et un retard de transmission qui sont d'un signal d'onde électromagnétique transmis à travers le canal de transmission ;
le module de génération de signal de puissance est configuré pour générer un signal d'onde électromagnétique cible sur la base des informations de canal et du paramètre de forme d'onde ; et
l'au moins une antenne d'émetteur-récepteur est configurée pour envoyer le signal d'onde électromagnétique cible au dispositif à charger (1900) à travers le canal de transmission ; **caractérisé en ce que** le paramètre de forme d'onde est un facteur exponentiel pour une opération exponentielle effectuée sur l'atténuation de signal dans les informations de canal dans un processus de génération du signal d'onde électromagnétique cible ; dans lequel le signal d'onde électromagnétique cible satisfait à la formule suivante :

$$w_n = e^{j\overline{\varphi n}} A_n^{\beta} \sqrt{\frac{2P}{\sum_{n=1}^{N} A_n^{2\beta}}}$$

où n représente la première fréquence, $w_n$ représente le signal d'onde électromagnétique cible, $\varphi_n$ représente le retard de transmission inclus dans les informations de canal, $A_n$ représente l'atténuation de signal incluse dans les informations de canal, P est la puissance de transmission totale de l'appareil de charge sans fil (1800), et $\beta$ est le paramètre de forme d'onde.

11. Appareil de charge sans fil (1800) selon la revendication 10, dans lequel, lors de l'obtention du paramètre de forme d'onde utilisé pour indiquer une forme d'onde d'un signal d'onde électromagnétique, le module de traitement de signal est spécifiquement configuré pour :
sélectionner le paramètre de forme d'onde à partir d'au moins un paramètre de forme d'onde candidat prédéfini.

12. Appareil de charge sans fil (1800) selon la revendication 11, dans lequel l'au moins une antenne d'émetteur-récepteur est en outre configurée pour :

envoyer au moins un premier signal de test au dispositif à charger (1900) à travers le canal de transmission, dans lequel l'au moins un premier signal de test est en correspondance biunivoque avec l'au moins un paramètre de forme d'onde candidat, et tout premier signal de test est généré sur la base d'un paramètre de forme d'onde candidat correspondant ; et
recevoir, à travers le canal de transmission, un premier résultat de mesure envoyé par le dispositif à charger (1900), dans lequel le premier résultat de mesure est obtenu en mesurant une qualité de signal de l'au moins un premier signal de test par le dispositif à charger (1900) ; et
lors de la sélection du paramètre de forme d'onde à partir de l'au moins un paramètre de forme d'onde candidat prédéfini, le module de traitement de signal est spécifiquement configuré pour :
sélectionner le paramètre de forme d'onde à partir de l'au moins un paramètre de forme d'onde candidat sur la base du premier résultat de mesure.

13. Appareil de charge sans fil (1800) selon la revendication 12, dans lequel :
le premier résultat de mesure comprend la qualité de signal de l'au moins un premier signal de test ; et lors de la sélection du paramètre de forme d'onde à partir de l'au moins un paramètre de forme d'onde candidat sur la base du premier résultat de mesure, le module de traitement de signal est spécifiquement configuré pour :

déterminer un premier signal de test cible avec une qualité de signal la plus élevée sur la base de la qualité de signal de l'au moins un premier signal de test compris dans le premier résultat de mesure ; et déterminer, à partir de l'au moins un paramètre de forme d'onde candidat, un paramètre de forme d'onde candidat correspondant au premier signal de test cible en tant que paramètre de forme d'onde ;
ou
le premier résultat de mesure comprend des premières informations d'indication, et les premières informations d'indication sont utilisées pour indiquer un premier signal de test cible avec une qualité de signal la plus élevée dans l'au moins un premier signal de test ; et lors de la sélection du paramètre de forme d'onde à partir de l'au moins un paramètre de forme d'onde candidat sur la base du premier résultat de mesure, le module de traitement de signal est spécifiquement configuré pour :
déterminer le premier signal de test cible indiqué par les premières informations d'indication ; et déterminer, à partir de l'au moins un paramètre de forme d'onde candidat, un paramètre de forme d'onde candidat correspondant au premier signal de test cible comme paramètre de forme d'onde.

14. Dispositif à charger (1900), comprenant au moins une antenne d'émetteur-récepteur et un module de réception de puissance, dans lequel

l'au moins une antenne d'émetteur-récepteur est configurée pour recevoir, à travers un canal de transmission, un signal d'onde électromagnétique cible envoyé par un appareil de charge sans fil (1800), dans lequel le signal d'onde électromagnétique cible est généré par l'appareil de charge sans fil (1800) sur la base d'informations de canal obtenues du canal de transmission et d'un paramètre de forme d'onde obtenu utilisé pour indiquer une forme d'onde d'un signal d'onde électromagnétique ; et

le module de réception de puissance est configuré pour: convertir le signal d'onde électromagnétique cible en un signal de courant continu, et effectuer une charge sur la base du signal de courant continu ;

**caractérisé en ce que** le paramètre de forme d'onde est un facteur exponentiel pour une opération exponentielle effectuée sur l'atténuation de signal dans les informations de canal dans un processus de génération du signal d'onde électromagnétique cible ;

dans lequel le signal d'onde électromagnétique cible satisfait à la formule suivante :

$$w_n = e^{j\overline{\varphi_n}} A_n^{\beta} \sqrt{\frac{2P}{\sum_{n=1}^{N} A_n^{2\beta}}}$$

où n représente la première fréquence, $w_n$ représente le signal d'onde électromagnétique cible, $\varphi_n$ représente le retard de transmission inclus dans les informations de canal, $A_n$ représente l'atténuation de signal incluse dans les informations de canal, P est la puissance de transmission totale de l'appareil de charge sans fil (1800), et $\beta$ est le paramètre de forme d'onde.

15. Dispositif à charger (1900) selon la revendication 14, dans lequel l'au moins une antenne d'émetteur-récepteur est en outre configurée pour :

recevoir, à travers le canal de transmission, au moins un premier signal de test envoyé par l'appareil de charge sans fil (1800), dans lequel l'au moins un premier signal de test est dans une correspondance biunivoque avec au moins un paramètre de forme d'onde candidat, et tout premier signal de test est généré sur la base d'un paramètre de forme d'onde candidat correspondant ; et

envoyer un premier résultat de mesure à l'appareil de charge sans fil (1800) à travers le canal de transmission, de sorte que l'appareil de charge sans fil (1800) sélectionne le paramètre de forme d'onde à partir de l'au moins un paramètre de forme d'onde candidat sur la base du premier résultat de mesure ;

le module de réception de puissance est en outre configuré pour mesurer une qualité de signal de l'au moins un premier signal de test ; et

le dispositif à charger (1900) comprend en outre un module de traitement de signal, et

le module de traitement de signal est configuré pour générer le premier résultat de mesure sur la base de la qualité de signal de l'au moins un premier signal de test.

16. Dispositif à charger (1900) selon la revendication 15, dans lequel

le premier résultat de mesure comprend la qualité de signal de l'au moins un premier signal de test ; ou

le premier résultat de mesure comprend des premières informations d'indication, et les premières informations d'indication sont utilisées pour indiquer un premier signal de test cible avec une qualité de signal la plus élevée dans l'au moins un premier signal de test.

17. Procédé de charge sans fil, appliqué à un appareil de charge sans fil (1800), dans lequel le procédé comprend :

l'obtention, dans une période de charge, d'informations de canal d'un canal de transmission et d'un paramètre de forme d'onde utilisé pour indiquer une forme d'onde d'un signal d'onde électromagnétique, dans lequel le canal de transmission est un canal entre l'appareil de charge sans fil (1800) et un dispositif à charger (1900) à une première fréquence, et les informations de canal comprennent une atténuation de signal et un retard de transmission qui sont d'un signal d'onde électromagnétique transmis à travers le canal de transmission ; et

la génération d'un signal d'onde électromagnétique cible sur la base des informations de canal et du paramètre de forme d'onde, et l'envoi du signal d'onde électromagnétique cible au dispositif à charger (1900) à travers le canal de transmission, de sorte que le dispositif à charger (1900) convertit le signal d'onde électromagnétique cible en un signal de courant continu, et effectue une charge sur la base du signal de courant continu ;

**caractérisé en ce que** le paramètre de forme d'onde est un facteur exponentiel pour une opération exponentielle effectuée sur l'atténuation de signal dans les informations de canal dans un processus de génération du signal d'onde électromagnétique cible ;

dans lequel le signal d'onde électromagnétique cible satisfait à la formule suivante :

$$w_n = e^{j\overline{\varphi_n}} A_n^\beta \sqrt{\frac{2P}{\sum_{n=1}^N A_n^{2\beta}}}$$

où n représente la première fréquence, $w_n$ représente le signal d'onde électromagnétique cible, $\varphi_n$ représente le retard de transmission inclus dans les informations de canal, $A_n$ représente l'atténuation de signal incluse dans les informations de canal, P est la puissance de transmission totale de l'appareil de charge sans fil (1800), et $\beta$ est le paramètre de forme d'onde.

**18.** Procédé de charge sans fil, appliqué à un dispositif à charger (1900), dans lequel le procédé comprend :

la réception, dans une période de charge à travers un canal de transmission, d'un signal d'onde électromagnétique cible envoyé par un appareil de charge sans fil (1800), dans lequel le signal d'onde électromagnétique cible est généré par l'appareil de charge sans fil (1800) sur la base d'informations de canal obtenues du canal de transmission et d'un paramètre de forme d'onde obtenu utilisé pour indiquer une forme d'onde d'un signal d'onde électromagnétique ; et

la conversion du signal d'onde électromagnétique cible en un signal de courant continu, et le fait d'effectuer une charge sur la base du signal de courant continu ;

**caractérisé en ce que** le paramètre de forme d'onde est un facteur exponentiel pour une opération exponentielle effectuée sur l'atténuation de signal dans les informations de canal dans un processus de génération du signal d'onde électromagnétique cible ;

dans lequel le signal d'onde électromagnétique cible satisfait à la formule suivante :

$$w_n = e^{j\overline{\varphi_n}} A_n^\beta \sqrt{\frac{2P}{\sum_{n=1}^N A_n^{2\beta}}}$$

où n représente la première fréquence, $w_n$ représente le signal d'onde électromagnétique cible, $\varphi_n$ représente le retard de transmission inclus dans les informations de canal, $A_n$ représente l'atténuation de signal incluse dans les informations de canal, P est la puissance de transmission totale de l'appareil de charge sans fil (1800), et $\beta$ est le paramètre de forme d'onde.

Device 1

Device 2

Wireless charging apparatus

Device 3

FIG. 1

FIG. 2

FIG. 3

FIG. 4

EP 4 096 058 B1

EP 4 096 058 B1

Signal radiation mode
without beamforming

Signal radiation mode
with beamforming

To-be-charged
device 1

To-be-charged
device 1

Wireless charging
apparatus

Wireless charging
apparatus

To-be-charged
device 2

To-be-charged
device 2

To-be-charged
device 3

To-be-charged
device 3

FIG. 5

Used to
determine
a waveform
parameter

Used to
determine
channel
information

Target
electromagnetic
wave signal

Target
electromagnetic
wave signal
determining phase

Wireless energy transmission phase

• • •

A charging period

FIG. 6

```
┌──────────────────┐                              ┌──────────────────┐
│  Wireless charging │                              │ To-be-charged device │
│     apparatus      │                              │                    │
└──────────────────┘                              └──────────────────┘
         │        S701: At least one first test signal        │
         │ ─────────────────────────────────────────────────> │
         │                                                     │
         │                              ┌───────────────────────────────────────┐
         │                              │ S702: Measure signal quality of each first test │
         │                              │ signal, and generate a first measurement result │
         │                              │ based on receive power of each first test signal │
         │                              └───────────────────────────────────────┘
         │           S703: First measurement result            │
         │ <───────────────────────────────────────────────── │
  ┌───────────────────────────────────────────┐              │
  │ S704: Select a waveform parameter from at  │              │
  │ least one preset candidate waveform parameter │           │
  │     based on the first measurement result  │              │
  └───────────────────────────────────────────┘              │
         │                                                     │
```

FIG. 7

```
┌──────────────────┐                              ┌──────────────────┐
│  Wireless charging │                              │  To-be-charged    │
│     apparatus      │                              │     device        │
└──────────────────┘                              └──────────────────┘
         │            S801: Beacon signal                      │
         │ ─────────────────────────────────────────────────> │
         │                                                     │
         │                     ┌───────────────────────────────────────────┐
         │                     │ S802: Perform channel measurement based on the │
         │                     │ received beacon signal to obtain channel information │
         │                     └───────────────────────────────────────────┘
         │           S803: Channel information                 │
         │ <───────────────────────────────────────────────── │
         │                                                     │
```

FIG. 8

Wireless charging
apparatus

To-be-charged
device

S901: Beacon signal

S902: Perform channel measurement based on the
received beacon signal to obtain channel information

FIG. 9

Wireless charging
apparatus

To-be-charged
device

S1001: At least one second test signal

S1002. Measure signal quality of each second test signal,
and generate a second measurement result based on the
signal quality of each second test signal

S1003: Second measurement result

S1004: Select channel information from at least
one piece of preset candidate channel information
based on the second measurement result

FIG. 10

Wireless charging apparatus

First signal processing module    1102

Power signal generation module    1103

First communications module    1104

1101
First transceiver antenna

Switch 1

Wireless channel

To-be-charged device

1105
Second transceiver antenna

Switch 2

Power receiving module    1106

Second communications module    1108

Second signal processing module    1107

FIG. 11

FIG. 12

EP 4 096 058 B1

FIG. 13

**To-be-charged device**

1106 — Power receiving module — S1331

1105 — Second transceiver antenna

1108 S1318

1107 — Second signal processing module

S1320 S1307 — Second communications module

S1305

S1316 - S1330

S1304

S1321 — S1308

S1322 — S1309

S1303-S1315-S1329

Wireless channel

**Wireless charging apparatus**

1101 — First transceiver antenna

1102 — First signal processing module

1103 — Power signal generation module

1104 — First communications module

S1314 — S1328

S1323 — S1310

S1302

S1312 S1326

S1324 S1311

FIG. 14

**To-be-charged device**

S1526 — 1106 Power receiving module

S1513 — 1108 Second communications module

1107 Second signal processing module — S1515

S1511 - S1525 — 1105

S1516 – S1502

Second transceiver antenna

Wireless channel

S1510 – S1524

S1517 - S1503

First transceiver antenna — 1101

**Wireless charging apparatus**

1102 First signal processing module

S1507 S1521

1103 Power signal generation module — S1509 – S1523

S1519 – S1505

S1518 – S1504 — 1104 First communications module

FIG. 15

FIG. 16

FIG. 17

1800

Wireless charging apparatus

1801

1802

Transceiver antenna

Processor

1803

Memory

FIG. 18

1900

To-be-charged device

1901

1902

Transceiver antenna

Processor

1903

Memory

FIG. 19

FIG. 20a

FIG. 20b

EP 4 096 058 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020210283 A1